# EUROPEAN PATENT APPLICATION

(11) **EP 4 194 804 A1**
(43) Date of publication of application: **14.06.2023**
(21) Application number: 21852597.0
(22) Date of filing: 04.08.2021
(51) Int. Cl.: G01B 11/25, G06T 7/90

(54) **METHOD AND DEVICE FOR ACQUIRING THREE-DIMENSIONAL DATA, AND COMPUTER-READABLE STORAGE MEDIUM STORING PROGRAM FOR PERFORMING METHOD**

(30) Priority: 05.08.2020 KR 20200098230; 22.07.2021 KR 20210096699
(71) Applicant: Medit Corp., Seoul 07207 (KR)
(72) Inventor: IM, Sung Bin, Seoul 07207 (KR)
(74) Representative: Taor, Simon Edward William
(86) International application number: PCT/KR2021/010252
(87) International publication number: WO 2022/031022

(57) **Abstract**

According to an aspect of the present disclosure, a three-dimensional (3D) data acquisition apparatus includes a communication interface communicating with a 3D scanner, and a processor configured to execute at least one instruction to obtain 3D data, wherein the processor to operate in a first mode to obtain first data by scanning an object by using the 3D scanner, switch an operation mode to a second mode when a metal area is detected from the object, operate in the second mode to obtain second data by scanning the object by using the 3D scanner, and obtain 3D data of the object, based on the first data and the second data.

## Description

### Technical Field

The present disclosure relates to a method and apparatus for obtaining three-dimensional (3D) data, and more particularly, to a method and apparatus for obtaining 3D data on teeth by using a 3D scanner.

### Background Art

Dental computer-aided design /computer-aided manufacturing (CAD/CAM) technology is widely used for dental treatment, particularly, prosthetics. The most important thing in dental treatment using CAD/CAM is to obtain precise three-dimensional (3D) data on a shape of an object such as a patient's teeth, gums, or a jawbone. When 3D data obtained from an object is used to perform dental treatment, accurate calculation may be performed by a computer.

For example, methods such as computed tomography (CT), magnetic resonance imaging (MRI), and optical scanning may be used to obtain 3D data of an object in dental CAD/CAM treatment.

Optical 3D scanners are widely used in the field of dental CAD/CAM. An optical 3D scanner may obtain 3D surface shape information by using light reflected from an object. For example, an optical 3D scanner may obtain an impression of a tooth, a gypsum model obtained for the impression, or 3D data of a tooth surface. The surface data may be recorded as polygon mesh data, and may include position information of vertices of the surface of the object and connection relationship information of the vertices. Alternatively, the surface data may be recorded as point cloud data, and may include position information of vertices of the surface of the object.

### Disclosure

### Technical Problem

In order to obtain good results in dental treatment using computer-aided design / computer-aided manufacturing (CAD/CAM), three-dimensional (3D) data that accurately reflects a shape of an object is required. However, when 3D data of a tooth surface is obtained by using a 3D scanner, metal structures in an oral cavity such as inlays, onlays, crowns, prosthetics, and orthodontic appliances have a high reflectance of light and thus, shapes of the metal structures may not be accurately scanned.

### Technical Solution

According to an aspect of the present disclosure, a three-dimensional (3D) data acquisition apparatus includes a communication interface communicating with a 3D scanner, and a processor configured to execute at least one instruction to obtain 3D data to operate in a first mode to obtain first data by scanning an object by using the 3D scanner, switch an operation mode to a second mode based on a metal area being detected from the object, operate in the second mode to obtain second data by scanning the object by using the 3D scanner, and obtain 3D data of the object, based on the first data and the second data.

A 3D data acquisition method according to an embodiment may obtain an accurate shape of a metal structure in an oral cavity.

### Advantageous Effects

### Description of Drawings

The disclosure may be readily understood from the following detailed description in conjunction with the accompanying drawings, and reference numerals denote structural elements.
FIG. 1 is a view for describing a three-dimensional (3D) data acquisition apparatus, according to an embodiment.
FIG. 2 is a view for describing a method in which a 3D scanner obtains surface data, according to an embodiment.
FIG. 3 is a view for describing point pattern light projected to an object, according to an embodiment.
FIG. 4 is a flowchart illustrating a method in which a 3D data acquisition apparatus obtains 3D data, according to an embodiment.
FIG. 5 is a view for describing a method in which a 3D data acquisition apparatus obtains 3D data of an object by using point pattern light and line pattern light, according to an embodiment.
FIG. 6 is a view for describing a method in which a 3D data acquisition apparatus obtains 3D data of an object by merging first data with second data, according to an embodiment.
FIG. 7 illustrates an example of 3D data obtained according to an embodiment.
FIG. 8 illustrates an example of 3D data obtained according to an embodiment.
FIG. 9 is a flowchart illustrating a method in which a 3D data acquisition apparatus obtains 3D data, according to an embodiment.
FIG. 10 illustrates an example of a user interface displayed by a 3D data acquisition apparatus, according to an embodiment.
FIG. 11 illustrates an example of 3D data obtained by a 3D data acquisition apparatus by scanning an object in a first mode and a second mode, according to an embodiment.
FIG. 12 illustrates an example of mesh data obtained by scanning a general area and mesh data obtained by scanning a metal area, by a 3D data acquisition apparatus, according to an embodiment.
FIG. 13 is a view for describing Delaunay triangulation performed by a 3D data acquisition apparatus, according to an embodiment.
FIG. 14 illustrates an example of filtering performed by a 3D data acquisition apparatus on mesh data, according to an embodiment.
FIG. 15 illustrates an example of filtering performed by a 3D data acquisition apparatus on mesh data, according to an embodiment.
FIG. 16 is a block diagram of a 3D data acquisition apparatus, according to an embodiment.

### Best Mode

According to an aspect of the present disclosure, a three-dimensional (3D) data acquisition apparatus includes a communication interface communicating with a 3D scanner, and a processor configured to execute at least one instruction to obtain 3D data to operate in a first mode to obtain first data by scanning an object by using the 3D scanner, switch an operation mode to a second mode based on a metal area being detected from the object, operate in the second mode to obtain second data by scanning the object by using the 3D scanner, and obtain 3D data of the object, based on the first data and the second data.

Also, in an embodiment of the present disclosure, the processor may be further configured to obtain the first data on a surface of the object to which pattern light of a first type is projected, and obtain the second data on the surface of the object to which pattern light of a second type is projected.

Also, in an embodiment of the present disclosure, the pattern light of the first type may include line pattern light, and the pattern light of the second type may include point pattern light.

Also, in an embodiment of the present disclosure, the first data obtained in the first mode and the second data obtained in the second mode may be obtained through different post-processing methods.

Also, in an embodiment of the present disclosure, the processor may be further configured to obtain a first point cloud for a surface of the object, and obtain first mesh data by connecting adjacent points in the first point cloud, wherein the first data includes the first mesh data, and obtain a second point cloud for the surface of the object, and obtain second mesh data by connecting points in the second point cloud by using Delaunay triangulation, wherein the second data includes the second mesh data.

Also, in an embodiment of the present disclosure, the processor may be further configured to identify points corresponding to a metal area on the object in the second point cloud, and obtain the second mesh data, by connecting the identified points by using the Delaunay triangulation and connecting adjacent points for points that are not identified in the second point cloud.

Also, in an embodiment of the present disclosure, the processor may be further configured to perform filtering of deleting an edge connecting two points of a certain distance or more in the second mesh data.

Also, in an embodiment of the present disclosure, the processor may be further configured to obtain a first point cloud for a surface of the object, obtain first mesh data by connecting points in the first point cloud, and perform filtering of deleting a group including triangles whose number is equal to or less than a first value in the first mesh data, wherein the first data includes the first mesh data on which the filtering is performed, and obtain a second point cloud for the surface of the object, obtain second mesh data by connecting points in the second point cloud, and perform filtering of deleting a group including triangles whose number is equal to or less than a second value in the second mesh data, wherein the second data includes the second mesh data on which the filtering is performed, wherein the second value is less than the first value.

Also, in an embodiment of the present disclosure, the processor may be further configured to detect presence of a metal area from the object, by analyzing data obtained by the 3D scanner by using an artificial intelligence (Al) model.

Also, in an embodiment of the present disclosure, the 3D data acquisition apparatus may further include a user input unit configured to receive a user input that selects an operation option of automatically changing the operation mode from the first mode to the second mode when a metal area is detected from the object.

According to another aspect of the present disclosure, a three-dimensional (3D) data acquisition method includes operating in a first mode to obtain first data by scanning an object by using a 3D scanner, switching an operation mode to a second mode, based on a metal area being detected from the object, operating in the second mode to obtain second data by scanning the object, and obtaining 3D data of the object, based on the first data and the second data.

Also, in an embodiment of the present disclosure, the operating in the first mode to obtain the first data may include obtaining the first data on a surface of the object to which pattern light of a first type is projected, and the operating in the second mode to obtain the second data may include obtaining the second data on the surface of the object to which pattern light of a second type is projected.

Also, in an embodiment of the present disclosure, the pattern light of the first type may include line pattern light, and the pattern light of the second type may include point pattern light.

Also, in an embodiment of the present disclosure, the first data obtained in the first mode and the second data obtained in the second mode may be obtained through different post-processing methods.

Also, in an embodiment of the present disclosure, the operating in the first mode to obtain the first data may include obtaining a first point cloud for a surface of the object, and obtaining first mesh data by connecting adjacent points in the first point cloud, wherein the first data includes the first mesh data, and the operating in the second mode to obtain the second data may include obtaining a second point cloud for the surface of the object, and obtaining second mesh data by connecting points in the second point cloud by using Delaunay triangulation, wherein the second data includes the second mesh data.

Also, in an embodiment of the present disclosure, the obtaining of the second mesh data may include identifying points corresponding to a metal area on the object in the second point cloud, and obtaining the second mesh data, by connecting the identified points by using the Delaunay triangulation and connecting adjacent points for points that are not identified in the second point cloud.

Also, in an embodiment of the present disclosure, the operating in the second mode to obtain the second data may further include performing filtering of deleting an edge connecting two points of a certain distance or more in the second mesh data.

Also, in an embodiment of the present disclosure, the operating in the first mode to obtain the first data may include obtaining a first point cloud for a surface of the object, obtaining first mesh data by connecting points in the first point cloud, and performing filtering of deleting a group including triangles whose number is equal to or less than a first value in the first mesh data, wherein the first data includes the first mesh data on which the filtering is performed, and the operating in the second mode to obtain the second data may include obtaining a second point cloud for the surface of the object, obtaining second mesh data by connecting points in the second point cloud, and performing filtering of deleting a group including triangles whose number is equal to or less than a second value in the second mesh data, wherein the second data includes the second mesh data on which the filtering is performed, wherein the second value is less than the first value.

Also, in an embodiment of the present disclosure, the switching of the operation mode to the second mode may include detecting a metal area from the object, by analyzing data obtained by the 3D scanner by using an artificial intelligence (Al) model.

Also, in an embodiment of the present disclosure, the 3D data acquisition method may further include receiving a user input that selects an operation option of automatically changing the operation mode from the first mode to the second mode when a metal area is detected from the object.

According to an aspect of the present disclosure, a three-dimensional (3D) data acquisition method includes projecting pattern light of a first type to an object, and obtaining first data on a surface of the object to which the pattern light of the first type is projected, projecting pattern light of a second type to the object, and obtaining second data on the surface of the object to which the pattern light of the second type is projected, and obtaining 3D data of the object, based on the first data and the second data.

Also, in an embodiment of the present disclosure, the pattern light of the first type may include line pattern light, and the pattern light of the second type may include point pattern light.

Also, in an embodiment of the present disclosure, the obtaining of the first data may include projecting the pattern light of the first type to the object, obtaining a two-dimensional (2D) image for the surface of the object to which the pattern light of the first type is projected, and obtaining first point cloud data of the object, based on the second image for the surface of the object to which the pattern light of the first type is projected and information about the pattern light of the first type, and the obtaining of the second data may include projecting the pattern light of the second type to the object, obtaining a 2D image for the surface of the object to which the pattern light of the second type is projected, and obtaining second point cloud data of the object, based on the 2D image for the surface of the object to which the pattern light of the second type is projected and information about the pattern light of the second type.

Also, in an embodiment of the present disclosure, the first data and the second data may be obtained by a 3D scanner that scans n (n is a natural number) frames per t time, wherein the obtaining of the first data includes projecting the pattern light of the first type to the object, and obtaining 'a' (a is a natural number less than n) frames including a 2D image for the surface of the object to which the pattern light of the first type is projected, and the obtaining of the second data may include projecting the pattern light of the second type to the object, and obtaining 'b' (b is a natural number equal to or less than n-a) frames including a 2D image for the surface of the object to which the second pattern light is projected.

Also, in an embodiment of the present disclosure, the obtaining of the second data may include obtaining a plurality of frames including a 2D image for the surface of the object to which different pieces of pattern light of the second type are sequentially projected.

Also, in an embodiment of the present disclosure, the obtaining of the first data may include projecting the pattern light of the first type to the object, obtaining a 2D image for the surface of the object to which the pattern light of the first type is projected, and obtaining first point cloud data of the object based on the 2D image for the surface of the object to which the pattern light of the first type is projected and information about the pattern light of the first type, wherein the 2D data acquisition method further includes determining whether to project the pattern light of the second type instead of the pattern light of the first type or alternately project the pattern light of the first type and the pattern light of the second type.

Also, in an embodiment of the present disclosure, the obtaining of the first data may include projecting the pattern light of the first type to the object, obtaining a 2D image for the surface of the object to which the pattern light of the first type is projected, and obtaining first point cloud data of the object based on the 2D image for the surface of the object to which the pattern light of the first type is projected and information about the pattern light of the first type, wherein the 3D data acquisition method further includes determining, when a difference between a frame including the 2D image obtained for the surface of the object to which the pattern light of the first type is projected and a neighboring frame adjacent to the frame is equal to or greater than a threshold value, whether to project the pattern light of the second type instead of the pattern light of the first type or alternately project the pattern light of the first type and the pattern light of the second type.

Also, in an embodiment of the present disclosure, the obtaining of the first data may include projecting the pattern light of the first type to the object, obtaining a 2D image for the surface of the object to which the pattern light of the first type is projected, and obtaining first point cloud data of the object based on the 2D image for the surface of the object to which the pattern light of the first type is projected and information about the pattern light of the first type, wherein the 3D data acquisition method further includes determining whether to project the pattern light of the second type instead of the pattern light of the first type or alternately project the pattern light of the first type and the pattern light of the second type, based on the 2D image obtained for the surface of the object to which the pattern light of the first type is projected, by using an artificial intelligence (Al) model.

Also, in an embodiment of the present disclosure, the obtaining of the second data may include projecting red pattern light of the second type to the object, obtaining an R frame including a 2D image for the surface of the object to which the red pattern light of the second type is projected, projecting green pattern light of the second type to the object, obtaining a G frame including a 2D image for the surface of the object to which the green pattern light of the second type is projected, projecting blue pattern light of the second type to the object, and obtaining a B frame including a 2D image for the surface of the object to which the blue pattern light of the second type is projected.

Also, in an embodiment of the present disclosure, the obtaining of the first data may include projecting blue pattern light of the first type to the object, and obtaining a frame including a 2D image for the surface of the object to which the blue pattern light of the first type is projected, and the obtaining of the second data may include projecting red pattern light or green pattern light of the second type to the object, and obtaining a frame including a 2D image for the surface of the object to which the red pattern light or the green pattern light of the second type is projected.

Also, in an embodiment of the present disclosure, the obtaining of the 3D data may include obtaining the 3D data based on first shape information of the object included in the first data, and second shape information and color information of the object included in the second data.

Also, in an embodiment of the present disclosure, the obtaining of the 3D data may include obtaining the 3D data, by merging first point cloud data included in the first data with second point cloud data included in the second data.

Also, in an embodiment of the present disclosure, the obtaining of the 3D data may include obtaining the 3D data based on a weighted sum of the first data and the second data.

Also, in an embodiment of the present disclosure, the obtaining of the 3D data may include obtaining the 3D data, by using the first data for at least a partial area of the object with high reliability and using the second data for a remaining area of the object with low reliability, based on reliability of the first data.

Also, in an embodiment of the present disclosure, the obtaining of the 3D data may include determining a weight of the first data based on reliability of the first data, and obtaining the 3D data, by merging the first data with the second data based on the weight.

Also, in an embodiment of the present disclosure, the obtaining of the 3D data may include determining overlapping points between a plurality of first points included in the first data and a plurality of second points included in the second data, and obtaining the 3D data by using an average value of the overlapping points.

Also, in an embodiment of the present disclosure, the first data and the second data may be obtained by a 3D scanner that continuously scans frames for the object, wherein the obtaining of the 3D data includes assigning a high weight to data having a high similarity to neighboring frames from among the first data and the second data, and obtaining the 3D data based on a weighted sum obtained by applying the assigned weight to the first data and the second data.

According to another aspect of the present disclosure, a 3D data acquisition apparatus includes a display, a communication interface communicating with a 3D scanner, and at least one processor configured to execute at least one instruction to obtain 3D data, wherein the processor is further configured to project pattern light of a first type to an object by using the 3D scanner, and obtain first data on a surface of the object to which the pattern light of the first type is projected, project pattern light of a second type to the object by using the 3D scanner, and obtain second data on the surface of the object to which the pattern light of the second type is projected, and obtain 3D data of the object based on the first data and the second data.

Also, in an embodiment of the present disclosure, the first data and the second data may be obtained by the 3D scanner that scans n (n is a natural number) frames per t time, wherein the 3D scanner is configured to project the pattern light of the first type to the object, obtain 'a' (a is a natural number less than n) frames including a two-dimensional (2D) image for the surface of the object to which the pattern light of the first type is projected, project the pattern light of the second type to the object, and obtain 'b' (b is a natural number equal to or less than n-a) frames including a 2D image for the surface of the object to which the pattern light of the second type is projected.

Also, in an embodiment of the present disclosure, the first data and the second data may be obtained by the 3D scanner that continuously scans frames for the object, wherein the 3D scanner is configured to project the pattern light of the first type to the object and obtain a 2D image for the surface of the object to which the pattern light of the first type is projected, and the at least one processor is further configured to obtain first point cloud data for the object based on the 2D image for the surface of the object to which the pattern light of the first type is projected and information about the pattern light of the first type, and determine whether to project the pattern light of the second type instead of the pattern light of the first type or alternately project the pattern light of the first type and the pattern light of the second type.

Also, in an embodiment of the present disclosure, the 3D scanner may be configured to project red pattern light of the second type to the object, obtain an R frame including a 2D image for the surface of the object to which the red pattern light of the second type is projected, project green pattern light of the second type to the object, obtain a G frame including a 2D image for the surface of the object to which the green pattern light of the second type is projected, project blue pattern light of the second type to the object, and obtain a B frame including a 2D image for the surface of the object to which the blue pattern light of the second type is projected.

Also, in an embodiment of the present disclosure, the at least one processor may be further configured to, in the obtaining of the 3D data, extract first shape information of the object from the first data, extract second shape information and color information of the object from the second data, and obtain the 3D data based on the first shape information, the second shape information, and the color information.

Also, in an embodiment of the present disclosure, the at least one processor may be further configured to obtain the 3D data, by merging first point cloud data included in the first data with second point cloud data included in the second data.

According to another aspect of the present disclosure, a computer-readable recording medium stores a program for performing a three-dimensional (3D) data acquisition method, wherein the 3D data acquisition method includes projecting pattern light of a first type to an object, and obtaining first data on a surface of the object to which the pattern light of the first type is projected, projecting pattern light of a second type to the object, and obtaining second data on the surface of the object to which the pattern light of the second type is projected, and obtaining 3D data of the object, based on the first data and the second data.

### Mode for Invention

Principles and embodiments of the present disclosure will be described in detail in order to fully convey the scope of the present disclosure and enable one of ordinary skill in the art to embody and practice the present disclosure. The disclosed embodiments may be implemented in various forms.

The same reference numerals denote the same elements throughout the specification. All elements of embodiments are not described in the specification, and descriptions of matters well known in the art to which the present disclosure pertains or repeated descriptions between the embodiments will not be given. The terms such as "part" and "portion" used herein denote those that may be implemented by software or hardware. According to embodiments, a plurality of parts or portions may be implemented by a single unit or element, or a single part or portion may include a plurality of units or elements. Hereinafter, principles and embodiments of the present disclosure will be described in detail with the accompanying drawings.

In the present disclosure, an "object" may be a human, an animal, or a part of a human or animal, as a subject of image capturing operation. For example, an object may be a body part (e.g., an organ), an artificial structure that may be attached or inserted into the object, or a phantom. Hereinafter, a case of obtaining three-dimensional (3D) data of an oral cavity including at least one tooth as an object will be described. For example, an object may include teeth, gums, at least a portion of an oral cavity, and/or an artificial structure (e.g., an orthodontic appliance including brackets and a wire, an implant, an artificial tooth, a dental restoration including an inlay and an onlay, or an orthodontic aid inserted into the oral cavity) that may be inserted into the oral cavity. However, the present disclosure is not limited to a case of obtaining 3D data of an oral cavity, and may be applied to obtain 3D data of various objects.

In the present disclosure, the term "image" may be a two-dimensional (2D) image of an object or a 3D model or a 3D image three-dimensionally representing the object. In the present disclosure, an image may include both a 2D frame and a 3D frame. For example, an image may include a 2D frame including 2D images obtained at different viewpoints of an object, or a 3D frame represented using a point cloud or a polygon mesh.

Also, in the present disclosure, the term "data" may refer to information required to two-dimensionally or three-dimensionally represent an object, for example, raw data obtained from at least one image sensor. In detail, raw data may be a 2D image obtained to generate 3D data of an object. Raw data may be 2D images of different viewpoints obtained by a plurality of image sensors when an object is scanned by using a 3D scanner (e.g., an intraoral scanner).

Hereinafter, embodiments will be described in detail with reference to the drawings.

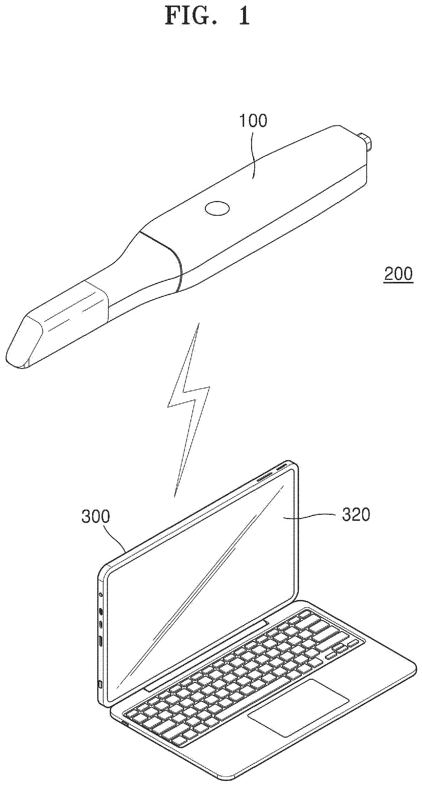

FIG. 1 is a view for describing a 3D data acquisition apparatus, according to an embodiment.

As shown in FIG. 1, a 3D data acquisition apparatus 200 according to an embodiment of the present disclosure may include a 3D scanner 100 and a 3D mage display apparatus 300.

The 3D data acquisition apparatus 200 according to an embodiment may obtain 3D data representing a shape of an object by using the principle of triangulation due to distortion of a pattern, by projecting pattern light to the object by using the 3D scanner 100 and scanning the object to which the pattern light is projected.

The 3D scanner 100 according to an embodiment may transmit raw data obtained from the object to the 3D image display apparatus 300. The 3D image display apparatus 300 may generate 3D data three-dimensionally representing a shape of a surface of the object, based on the received raw data. The 3D data may be point cloud data or polygon mesh data. The 3D scanner 100 according to another embodiment may generate a 3D frame by reconstructing the raw data obtained from the object, and may transmit the generated 3D frame to the 3D image display apparatus 300.

The 3D scanner 100 according to an embodiment may include a medical device for obtaining an image in an oral cavity. In detail, the 3D scanner 100 may be a device for obtaining a 3D model of the oral cavity including at least one tooth, by being inserted into the oral cavity and scanning the at least one tooth in a non-contact manner. Also, the 3D scanner 100 may have a shape that may be inserted into or withdrawn from the oral cavity, and may scan the inside of the patient's oral cavity by using at least one image sensor(e.g., an optical camera).

The 3D scanner 100 may obtain surface information of the object as raw data, in order to image a surface of at least one of teeth and gums in the oral cavity that is the object and an artificial structure (e.g., an orthodontic appliance including brackets and a wire, an implant, an artificial tooth, or an orthodontic aid inserted into the oral cavity) that may be inserted into the oral cavity. The 3D image display apparatus 300 may obtain 3D data by performing a 3D operation such as merging based on the raw data, and may display a 3D image obtained by rendering the 3D data on a screen.

The 3D image display apparatus 300 according to an embodiment may be connected to the 3D scanner 100 through a wired or wireless communication network, and may receive the raw data or the 3D frame obtained by scanning the object from the 3D scanner 100.

The 3D image display apparatus 300 may be any electronic device capable of generating, processing, displaying, and/or transmitting the 3D data or the 3D image of the object, based on the received raw data or 3D frame. For example, the 3D image display apparatus 300 may be a computing device such as, but not limited to, a smartphone, a laptop computer, a desktop computer, a personal digital assistant (PDA), or a tablet PC.

The 3D image display apparatus 300 may generate at least one of information required to diagnose the object and an object image, based on data received from the 3D scanner 100, and may display the generated information and/or image through a display 320.

The 3D image display apparatus 300 may analyze the 3D data or the 3D image of the object, and may process, display, and/or transmit an analysis result.

Also, the 3D image display apparatus 300 according to an embodiment may store and execute dedicated software linked to the 3D scanner 100. The dedicated software may be referred to as a dedicated program or a dedicated application. When the 3D image display apparatus 300 operates in conjunction with the 3D scanner 100, the dedicated software stored in the 3D image display apparatus 300 may be connected to the 3D scanner 100 and may drive the 3D image display apparatus 300 to receive data obtained through object scanning in real time. For example, there is dedicated software for processing data obtained through intraoral scanning by i500 that is an intraoral scanner of the company. The 3D image display apparatus 300 may store and execute dedicated software corresponding to the i500 product. The dedicated software may perform at least one operation for obtaining, processing, storing, and/or transmitting an intraoral image.

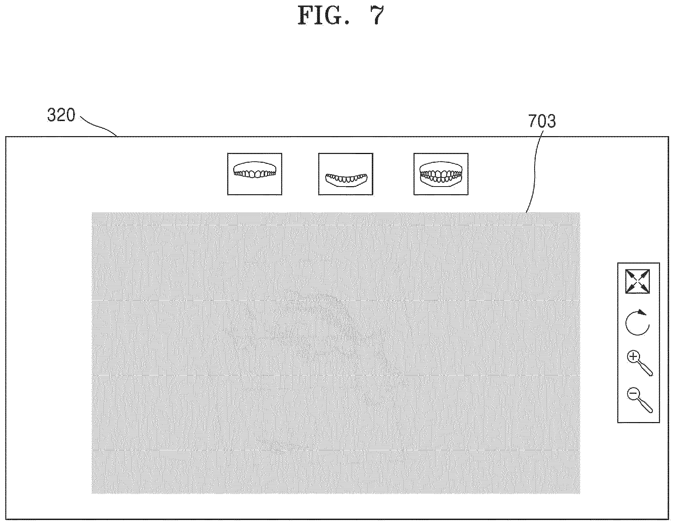

The dedicated software may be stored in a processor or a memory of the 3D image display apparatus 300. Also, the dedicated software may provide a user interface for using data obtained by the 3D scanner. A user interface screen provided by the dedicated software may include the 3D image of the object generated according to an embodiment. For example, in an embodiment, a user interface screen provided by the dedicated software may include at least some of user interface screens shown in FIGS. 7, 8, and 10.

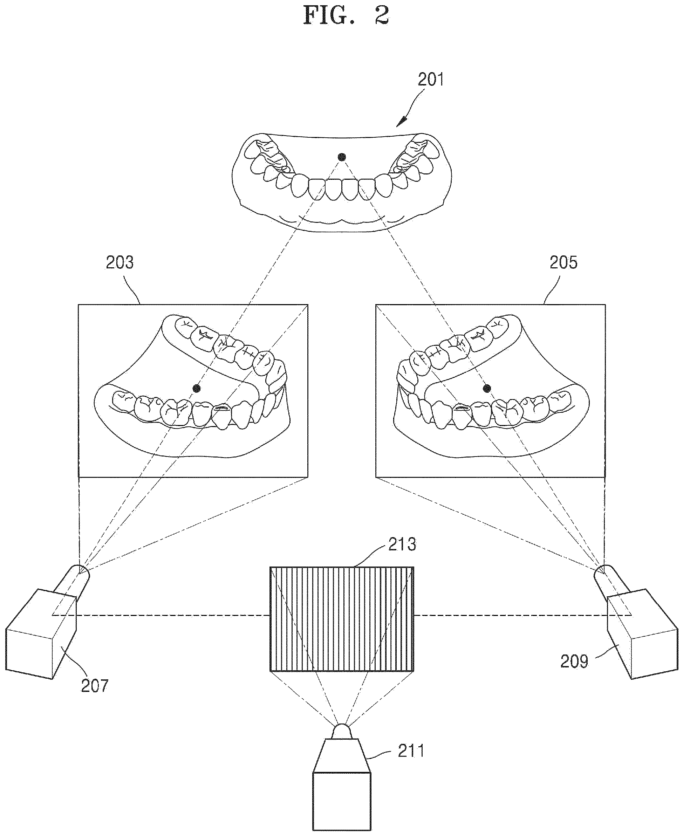

FIG. 2 is a view for describing a method in which an optical 3D scanner obtains surface data, according to an embodiment.

According to an embodiment, in order to obtain 3D data on a surface of an object by using the 3D scanner 100, a structured light with stereo vision method may be used.

The 3D scanner 100 according to an embodiment may include two or more cameras 207 and 209 and at least one projector 211 that may project structured light (or patterned light) 213. The 3D scanner 100 according to an embodiment may project the structured light 213 to an object 201, and may obtain an L image 203 corresponding to a left field of view and an R image 205 corresponding to a right field of view from the L camera 207 corresponding to the left field of view and the R camera 209 corresponding to the right field of view. The 3D scanner 100 may continuously obtain a 2D frame including the L image 203 and the R image 205 of the object 201. The 3D scanner 100 or the 3D image display apparatus 300 may reconstruct a 3D frame representing a surface shape of the object from the 2D frame including the L image 203 and the R image 205.

In FIG. 2, the 3D scanner 100 includes two cameras 207 and 209 and one projector 211. However, various embodiments of the present disclosure are not limited to an example of FIG. 2, and the 3D scanner may include one camera and one projector. When the 3D scanner includes one camera and one projector, the projector may simultaneously function as a camera for obtaining an image and a projector for projecting structured light. Also, according to various implementation methods of the present disclosure, the 3D scanner may include a plurality of cameras and a plurality of projectors.

The 3D scanner 100 may obtain a plurality of 2D frames by scanning the object at regular time intervals (e.g., several ms to tens of ms) while moving around the object. The 3D scanner 100 or the 3D image display apparatus 300 may obtain a plurality of 3D frames from the plurality of 2D frames. For example, the 3D scanner 100 may obtain 10 to 30 3D frames per second, and each 3D frame may be generated based on 20 to 30 2D frames. The 3D image display apparatus 300 may reconstruct 3D data of the entire object by merging or aligning the plurality of 3D frames.

When the 3D scanner 100 according to an embodiment scans an oral cavity according to a method of FIG. 2, it may be difficult to scan a shape of a metal structure in the oral cavity such as an inlay, an onlay, a crown, a prosthesis, or an orthodontic appliance. According to a 3D data acquisition method of obtaining 3D shape information of an object surface by projecting pattern light to an object, 3D shape information may be obtained only when a pattern is visible on the object surface. However, the amount of reflected light among pattern light projected to a metal structure is large, and thus, it is difficult to measure 3D shape information.

Accordingly, in order to scan a metal structure, a method in which the 3D scanner 100 projects brighter pattern light so that even part of pattern light is visible on an object surface may be used. For example, when the 3D scanner 100 may project pattern light by using each of a red light source, a green light source, and a blue light source to scan teeth, the 3D scanner 100 may project white pattern light to the surface of the object by simultaneously using the red light source, the green light source, and the blue light source.

Also, the 3D scanner 100 according to an embodiment may use point pattern light, instead of line pattern light, to scan a metal structure. For example, line pattern light may refer to light in which straight lines or curved lines are parallel to each other in a horizontal, vertical, or diagonal direction, like the pattern light 213 of FIG. 2. Point pattern light may refer to light in which points of a certain size or various sizes are arranged.

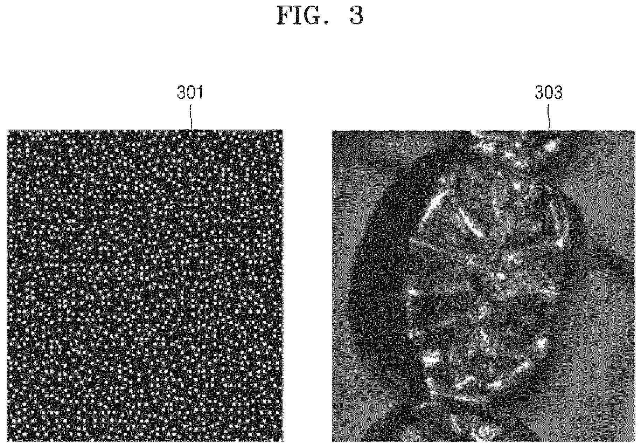

FIG. 3 is a view for describing point pattern light projected to an object, according to an embodiment.

As shown in FIG. 3, the 3D scanner 100 according to an embodiment may project point pattern light 301 to an object, and may obtain a 2D image frame 303 by scanning a surface of the object to which the point pattern light is projected. According to an embodiment, because points included in point pattern light may be randomly arranged with no certain rule, the point pattern light may be referred to as random pattern light.

The 3D data acquisition apparatus 200 according to an embodiment may obtain a plurality of 2D images by scanning the surface of the object to which the point pattern light is projected at different viewpoints. In this case, in order to obtain 3D shape information of the object surface from the plurality of 2D images, a stereo matching method may be used. The stereo matching method may include, for example, block matching, graph cut, or semi-global matching. The semi-global matching method may be a method of obtaining 3D shape information by using a pixelwise mutual information-based matching cost function to compensate for a radiometric difference value between 2D images.

The 3D scanner 100 according to an embodiment may obtain a larger amount of data related to a 3D shape of the object by scanning the surface of the object to which the point pattern light is projected, compared to a case where line pattern light is projected. Accordingly, when the point pattern light is used, more accurate 3D data may be obtained even for an area formed of a metal.

When the 3D scanner 100 uses line pattern light, even if a part of a line is scanned blurry due to light reflection, information about the entire line may not be used. However, when the 3D scanner 100 uses point pattern light, even if some points are scanned blurry due to light reflection, there is no problem in obtaining information from other points. Accordingly, because a method of using point pattern light is more resistant to light reflection than a method of using line pattern light, the method of using point pattern light may be more effective in obtaining data on an area formed of a metal. However, for a non-metal area, the method of using line pattern light may have higher precision than the method of using point pattern light.

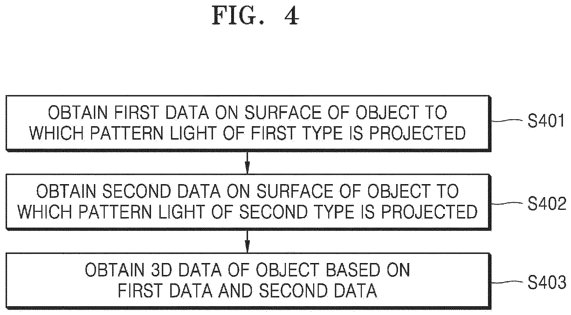

According to various embodiments of the present disclosure, the 3D data acquisition apparatus 200 may obtain 3D data of an object by using various operation modes. A specific method in which the 3D data acquisition apparatus 200 obtains 3D data of an object according to various embodiments will be described in detail with reference to FIGS. 4 to 16.

FIG. 4 is a flowchart illustrating a method in which a 3D data acquisition apparatus obtains 3D data, according to an embodiment.

In operation S401, the 3D data acquisition apparatus 200 according to an embodiment may project pattern light of a first type to an object, and may obtain first data on a surface of the object to which the pattern light of the first type is projected.

The 3D scanner 100 included in the 3D data acquisition apparatus 200 may project pattern light of a first type to an object, and may obtain 2D images of different viewpoints for a surface of the object to which the pattern light of the first type is projected. For example, the pattern light of the first type may include line pattern light. The 3D data acquisition apparatus 200 may obtain first point cloud data of the object as first data, based on the 2D images of the surface of the object to which the pattern light of the first type is projected and information about the pattern light of the first type.

For example, the 3D data acquisition apparatus 200 may determine which line of a 2D image scanned by a second image sensor corresponds to each line on the object shown in a 2D image scanned by a first image sensor of the 3D scanner 100. The 3D data acquisition apparatus 200 may calculate 3D coordinates of points constituting each line matched between 2D images, based on the projected line pattern and a distorted line shown in the 2D images. The 3D data acquisition apparatus 200 may obtain the first point cloud data by calculating 3D coordinates of each pixel included in the 2D images.

The 3D scanner 100 according to an embodiment may project the same pattern light of the first type to the object, or may sequentially project different pieces of pattern light of the first type to the object. For example, the 3D scanner 100 may obtain at least one frame of the surface of the object to which each of the different pieces of pattern light of the first type is projected.

In operation S402, the 3D data acquisition apparatus 200 according to an embodiment may project pattern light of a second type to the object, and may obtain second data on the surface of the object to which the pattern light of the second type is projected.

The 3D scanner 100 included in the 3D data acquisition apparatus 200 may project pattern light of a second type to the object, and may obtain 2D images of different viewpoints for the surface of the object to which the pattern light of the second type is projected. For example, the pattern light of the second type may include point pattern light. The 3D data acquisition apparatus 200 may obtain second point cloud data of the object as second data, based on the 2D images of the surface of the object to which the pattern light of the second type is projected and information about the pattern light of the second type.

For example, the 3D data acquisition apparatus 200 may determine which point of a 2D image scanned by the second image sensor corresponds to each point on the object shown in a 2D image scanned by the first image sensor. The 3D data acquisition apparatus 200 may calculate 3D coordinates of each point matched between 2D images, based on the projected point pattern and a distorted point pattern shown in the 2D images. The 3D data acquisition apparatus 200 may obtain the second point cloud data by calculating 3D coordinates of each pixel included in the 2D images.

The 3D scanner 100 according to an embodiment may project the same pattern light of the second type to the object, or may sequentially project different pieces of pattern light of the second type to the object. For example, the 3D scanner 100 may obtain at least one frame of the surface of the object to which each of the different pieces of pattern light of the second type is projected.

According to an embodiment, the 3D scanner 100 may be configured to alternately project the pattern light of the first type and the pattern light of the second type. The 3D scanner 100 may obtain the first data based on a plurality of 2D image frames obtained by using the pattern light of the first type, and may obtain the second data based on a plurality of 2D image frames obtained by using the pattern light of the second type.

For convenience of explanation, the present disclosure will be described assuming that the 3D scanner 100 projects the pattern light of the first type and then projects the pattern light of the second type. However, various embodiments of the present disclosure are not limited thereto, and because the 3D scanner 100 is configured to alternately project the pattern light of the first type and the pattern light of the second type, the 3D scanner 100 may project the pattern light of the second type and then may project the pattern light of the first type. Alternatively, the 3D scanner 100 may project the pattern light of the first type, then may project the pattern light of the second type, and then may project the pattern light of the first type again.

First, the 3D scanner 100 may obtain the first data by continuously scanning frames of the object to which the pattern light of the first type is projected. For example, the first data may be obtained by the 3D scanner 100 that repeatedly scans n (n is a natural number) frames per t time. For example, the 3D scanner 100 may scan 100 to 900 frames per second.

The 3D scanner 100 may obtain 'a' (a is a natural number less than n) frames per t time, including 2D images of different viewpoints for the surface of the object to which the pattern light of the first type is projected. For example, the 3D scanner 100 may obtain a frame including a first 2D image scanned by the first image sensor and a second 2D image scanned by the second image sensor for the surface of the object to which the pattern light of the first type is projected, and may perform this frame acquisition process `a' times within the t time. The 3D data acquisition apparatus 200 may obtain the first point cloud data as the first data based on the 'a' 2D image frames. For example, the 3D data acquisition apparatus 200 may obtain one point cloud from 20 to 30 2D image frames.

Next, the 3D scanner 100 may obtain the second data by continuously scanning frames of the object to which the pattern light of the second type is projected. The 3D scanner 100 may obtain 'b' (b is a natural number less than n-a) frames per t time, including 2D images of different viewpoints for the surface of the object to which the pattern light of the second type is projected. The 3D data acquisition apparatus 200 may obtain the second point cloud data as the second data based on the 'b' 2D image frames.

When the 3D scanner 100 obtains the second data by using the pattern light of the second type, the 3D scanner 100 may project at least one of red pattern light, green pattern light, and blue pattern light to the object, to obtain color information of the object. The 3D scanner 100 according to an embodiment may project red pattern light, green pattern light, and blue pattern light to the object, to obtain color information of the object.

For example, the 3D scanner 100 may project red pattern light of the second type to the object, and may obtain an R frame including 2D images of different viewpoints for the surface of the object to which the red pattern light of the second type is projected. The 3D scanner 100 may project green pattern light of the second type to the object, and may obtain a G frame including 2D images of different viewpoints for the surface of the object to which the green pattern light of the second type is projected. The 3D scanner 100 may project blue pattern light of the second type to the object, and may obtain a B frame including 2D images of different viewpoints for the surface of the object to which the blue pattern light of the second type is projected. The 3D data acquisition apparatus 200 may obtain the second point cloud data as the second data based on the R frame, the G frame, and the B frame.

However, the present disclosure is not limited to an embodiment where the 3D scanner 100 projects point pattern light by using all light source colors (i.e., red, green, and blue). The 3D canner 100 according to an embodiment may project line pattern light by using one of red, green, and blue light sources, and may use the rest of the red, green and blue light sources to project point pattern light, non-pattern light, or random pattern light. For example, the 3.D scanner 100 may project blue light of a line pattern, may project red light of a point pattern, and may project green light with no pattern (or random pattern green light).

According to another embodiment, the 3D scanner may be configured to scan the object to which the pattern light of the first type is projected, and then when a metal area is detected, project the pattern light of the second type.

First, the 3D scanner 100 may obtain the first data by continuously scanning frames of the object to which the pattern light of the first type is projected. The 3D data acquisition apparatus 200 may obtain the first point cloud data as the first data, based on the plurality of 2D image frames obtained from the object to which the pattern light of the first type is projected.

For example, when a difference in a brightness value between a frame including 2D images of different viewpoints obtained for the surface of the object to which the pattern light of the first type is projected and a neighboring frame is equal to or greater than a threshold value, the 3D data acquisition apparatus 200 may determine to project the pattern light of the second type, instead of the pattern light of the first type.

In another example, the 3D data acquisition apparatus 200 may determine whether an area of the object being scanned is a metal area, by using an artificial intelligence (Al) model. The 3D data acquisition apparatus 200 may determine whether an area of the object being scanned is a metal area, by applying a 2D image frame or a 3D frame obtained from the object as an input to the Al model. The Al model used to determine a metal area may be an Al model trained about a large amount of scan data obtained from a metal area and a non-metal area of an object. When it is determined that an area of the object is a metal area, the 3D data acquisition apparatus 200 may determine to project the pattern light of the second type, instead of the pattern light of the first type.

Next, the 3D scanner 100 may project the pattern light of the second type to the object, and may obtain the second data by continuously scanning frames of the object to which the pattern light of the second type is projected. The 3D data acquisition apparatus 200 may obtain the second point cloud data as the second data, based on the plurality of 2D image frames obtained from the object to which the pattern light of the second type is projected.

In operation S403, the 3D data acquisition apparatus 200 according to an embodiment may obtain 3D data of the object, based on the first data and the second data.

The first data obtained by the 3D scanner 100 by using the pattern light of the first type may include first shape information of the object. The second data obtained by the 3D scanner 100 by projecting at least one pattern light of the second type among red, green, and blue pattern lights may include second shape information and color information of the object. For example, the 3D scanner 100 may obtain the first shape information of the object by using the blue pattern light of the first type, and may obtain the second shape information and the color information of the object by projecting the red pattern light of the second type, the green pattern light of the second type, and the blue pattern light of the second type.

The 3D data acquisition apparatus 200 may obtain the 3D data based on the first shape information, the second shape information, and the color information.

The 3D data acquisition apparatus 200 according to an embodiment may obtain the 3D data, by merging the first point cloud data included in the first data with the second point cloud data included in the second data.

The 3D data acquisition apparatus 200 according to an embodiment may obtain the 3D data based on a weighted sum of the first data and the second data. For example, the first data, the second data, and the third data may be point cloud data or polygon mesh data.

The 3D data acquisition apparatus 200 according to an embodiment may obtain the 3D data, by using the first data for at least a partial area of the object with high reliability and using the second data for the remaining area of the object with low reliability, based on reliability of the first data.

The 3D data acquisition apparatus 200 according to another embodiment may determine a weight to be applied to the first data, based on the reliability of the first data. The 3D data acquisition apparatus 200 may obtain the 3D data, by merging the first data with the second data based on the weight.

The 3D data acquisition apparatus 200 according to another embodiment may determine overlapping points between a plurality of first points included in the first data and a plurality of second points included in the second data. The 3D data acquisition apparatus 200 may obtain the 3D data by using an average value of the overlapping points.

The 3D data acquisition apparatus 200 according to another embodiment may assign a high weight to data having a high similarity to neighboring frames, from among the first data and the second data. The 3D data acquisition apparatus 200 may obtain the 3D data based on a weighted sum obtained by applying the assigned weight to the first data and the second data.

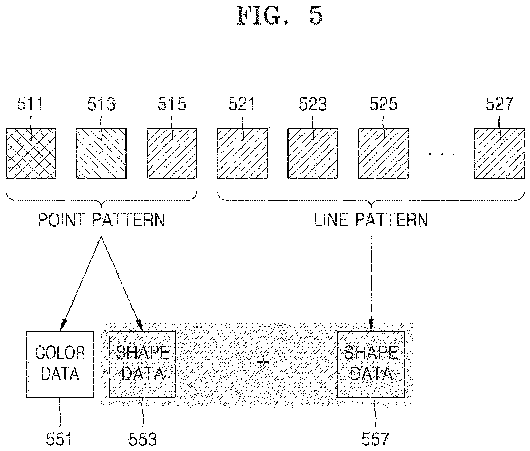

FIG. 5 is a view for describing a method in which a 3D data acquisition apparatus obtains 3D data of an object by using point pattern light and line pattern light, according to an embodiment.

The 3D data acquisition apparatus 200 according to an embodiment may obtain one 3D image frame from a plurality of 2D image frames. In this case, the plurality of 2D image frames used to obtain one 3D image frame may include an R frame 511, a G frame 513, and a B frame 515 for obtaining color data 551 and shape data 553 of an object, and frames 521, 523, 525, and 527 for obtaining shape data 557 of the object.

The 3D scanner 1010 may obtain the R frame 511 for a surface of the object to which red light of a point pattern is projected, may obtain the G frame 513 for the surface of the object to which green light of a point pattern is projected, and may obtain the B frame 515 for the surface of the object to which blue light of a point pattern is projected. The 3D scanner 100 may obtain the plurality of frames 521, 523, 525, and 527 for the surface of the object to which pattern light of a blue line is projected.

The 3D data acquisition apparatus 200 according to an embodiment may obtain 3D data of the object, by merging the shape data 553 of the object obtained by using point pattern light with the shape data 557 of the object obtained by using line pattern light. The shape data 553 and the shape data 557 of the object may be point cloud data indicating positions of points corresponding to the surface of the object in a 3D space. The 3D data acquisition apparatus 200 may obtain one 3D data by merging the shape data 553 with the shape data 557.

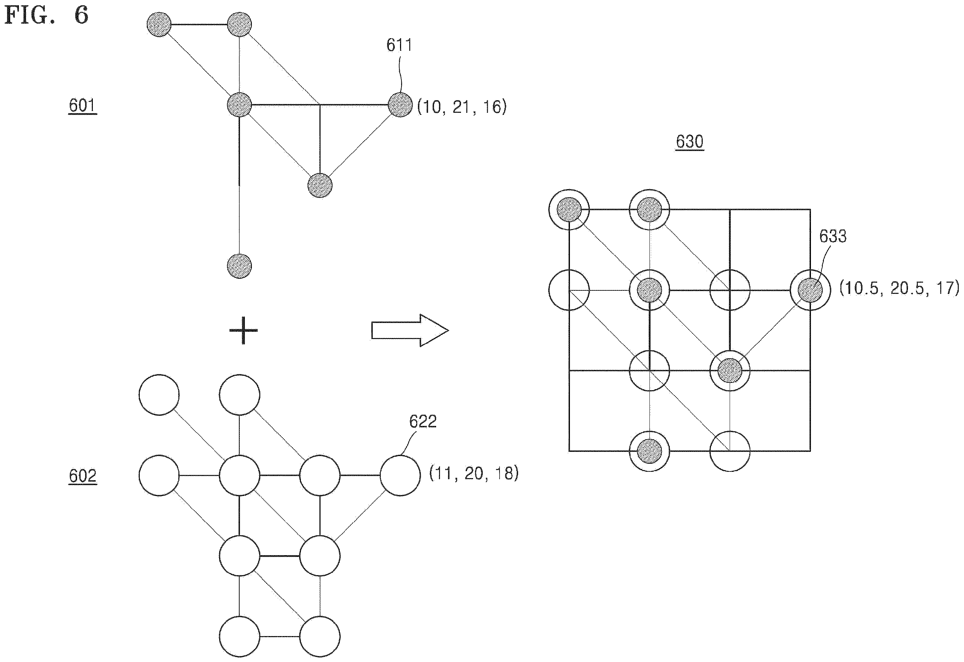

FIG. 6 is a view for describing a method in which a 3D data acquisition apparatus obtains 3D data of an object by merging first data with second data, according to an embodiment.

The 3D data acquisition apparatus 200 according to an embodiment may obtain 3D data 630, by merging a first point cloud 601 obtained by line pattern light with a second point cloud 602 obtained by point pattern light. As shown in FIG. 6, the amount of data of the second point cloud 602 obtained by using a point pattern may be greater than that of the first point cloud 601 obtained by using a line pattern.

The 3D data acquisition apparatus 200 may determine overlapping points between points included in the first point cloud 601 and points included in the second point cloud 602. When a point of the first point cloud 601 and a point of the second point cloud 602 are adjacent to each other in a 3D space, the points may be determined as overlapping points. For example, the 3D data acquisition apparatus 200 may determine a point located within a certain distance from a point included in the first point cloud 601, from among points included in the second point cloud 602, as an overlapping point. The 3D data acquisition apparatus 200 may obtain 3D data based on overlapping points.

The 3D data acquisition apparatus 200 according to an embodiment may determine a position of a point 633 in 3D data 630, based on a point 622 included in the second point cloud 602, adjacent to a point 611 included in the first point cloud 601.

For example, as shown in FIG. 6, the 3D data acquisition apparatus 200 may determine a position of the point 633 as (10.5, 20.5, 17), by calculating an average of coordinates (10, 21, 16) indicating a position of the point 611 and a coordinates (11, 20, 18) indicating a position of the point 622.

In another example, the 3D data acquisition apparatus 200 may determine a position of the point 633 by calculating a weighted sum of the coordinates (10, 21, 16) indicating the position of the point 611 and the coordinates (11, 20, 18) indicating the position of the point 622. For example, the 3D data acquisition apparatus 200 may determine a position of the point 633 as (10.3, 20.7, 16.6), by assigning a weight of 0.7 to the point 611 and assigning a weight of 0.3 to the point 622.

The 3D data acquisition apparatus 200 may use various methods to determine weights to be assigned to point merge the first point cloud 601 and the second point cloud 602. For example, the 3D data acquisition apparatus 200 may preferentially assign a high weight to the first point cloud 601 obtained by using the line pattern light, and may assign a relatively low weight to the second point cloud 602 obtained by using the point pattern light.

Alternatively, when the 3D data acquisition apparatus 200 continuously obtains point cloud 3D frames, the 3D data acquisition apparatus 200 may assign a high weight to a point cloud having a high similarity to neighboring 3D frames.

The 3D data acquisition apparatus 200 according to an embodiment may determine a similarity between a certain point cloud and a neighboring point cloud, based on a distance between at least one point included in the certain point cloud and at least one point included in the neighboring point cloud, and may determine a weight assigned to the certain point cloud based on the similarity. The neighboring point cloud may refer to a point cloud obtained from data scanned before the certain point cloud is obtained.

In an embodiment, the 3D data acquisition apparatus 200 may correspond a point of the first point cloud to a point of a neighboring point cloud obtained before the first point cloud is obtained. When a distance between the corresponding points is short, the 3D data acquisition apparatus 200 may determine that the point of the first point cloud and the point of the neighboring point cloud are well aligned with each other. Compared to the second point cloud, the 3D data acquisition apparatus 200 may assign a high weight to the point of the first point cloud when a distance between the corresponding points is short and may assign a low weight to the point of the first point cloud when a distance between the corresponding points is long.

And, the 3D data acquisition apparatus 200 may correspond a point of the second point cloud to a point of a neighboring point cloud obtained before the second point cloud is obtained, and compared to the first point cloud, and may assign a high weight to the point of the second point cloud when a distance between the corresponding points is short and assign a low weight to the point of the second point cloud when a distance between the corresponding points is long. The 3D data acquisition apparatus 200 may merge the first point cloud with the second point cloud based on the determined weight, to assign a high weight to a point cloud having a high similarity to a neighboring point cloud from among the first point cloud and the second point cloud.

In another example, the 3D data acquisition apparatus 200 may use a method of selecting a point more closely aligned with a neighboring point cloud from among a point of the first point cloud and a point of the second point cloud and including the point in the 3D data. A point more closely aligned with a neighboring point cloud from among a point of the first point cloud and a point of the second point cloud may be determined based on a distance between corresponding points. For example, the 3D data acquisition apparatus 200 may calculate a first distance between a first point of the first point cloud and a corresponding point of a neighboring point cloud, and may calculate a second distance between a second point of the second point cloud and a corresponding point of a neighboring point cloud. The 3D data acquisition apparatus 200 may compare the first distance with the second distance, and may determine that when a distance between corresponding points is short, the corresponding points are well aligned.

Alternatively, based on reliability of the first point cloud 601 obtained by using the line pattern light, the 3D data acquisition apparatus 200 may assign a high weight when the reliability of the first point cloud 601 is high and may assign a relatively low eight when the reliability of the first point cloud 601 is low. For example, when a contrast between lines in a plurality of 2D images obtained from a surface of an object to which the line pattern light is projected is clear (i.e., when a brightness difference between a line area and another area is equal to or greater than a threshold value), the 3D data acquisition apparatus 200 may determine that the reliability of a point cloud obtained from the plurality of 2D images is high.

FIG. 7 illustrates an example of 3D data obtained according to an embodiment.

The 3D data acquisition apparatus 200 according to an embodiment may obtain 3D data by merging first data with second data obtained from the 3D scanner 100. The display 320 of the 3D data acquisition apparatus 200 according to an embodiment may display a 3D image 703 of an object generated from the 3D data. As shown in FIG. 7, the 3D data may be point cloud data including a plurality of points arranged in a 3D space.

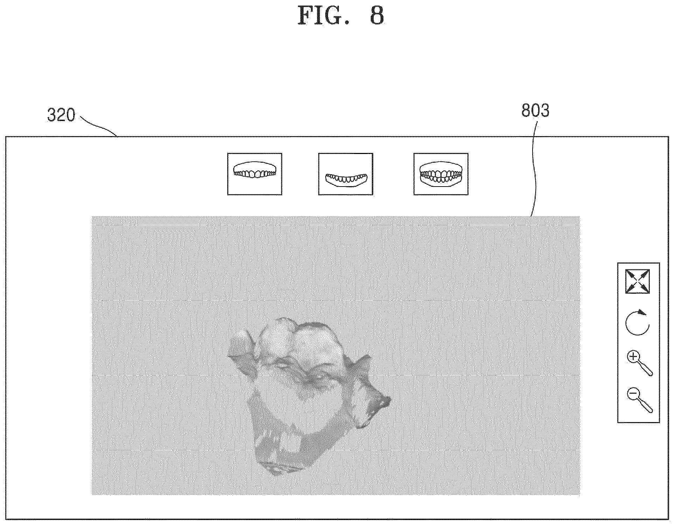

FIG. 8 illustrates an example of 3D data obtained according to an embodiment.

The display 320 of the 3D data acquisition apparatus 200 according to an embodiment may display a 3D image 803 of an object generated from 3D data. The 3D data may include not only shape information of the object but also color information. The 3D data acquisition apparatus 200 may generate the 3D image 803, by converting point cloud data into a polygon mesh or applying interpolation between a plurality of points.

The 3D data acquisition apparatus 200 according to an embodiment may obtain first data and second data by using different 3D scan methods in a first mode and a second mode, to obtain accurate 3D data of an object including a metal area. 3D scanning may refer to a process of obtaining a series of 3D point clouds, by using 2D image data and geometric information (e.g., calibration data) obtained by imaging an object by using a camera. Accordingly, the different 3D scanning methods may refer to 3D scan methods in which a least one of a parameter related to pattern light projected to the object, a method of obtaining a 2D image from the object, or a method of obtaining a 3D point cloud from 2D image data is different. For example, as described with reference to FIG. 4, the 3D data acquisition apparatus 200 may obtain the first data and the second data by projecting pieces of pattern light of different types, and may obtain the 3D data of the object including the metal area based on the first data and the second data.

The 3D data acquisition apparatus 200 according to another embodiment may obtain first data and second data by applying different post-processing methods to a 3D point cloud obtained from an object. The 3D data acquisition apparatus 200 may obtain accurate 3D data of the object including a metal area, by using the first data and the second data to which the different post-processing methods are applied. Post-processing refers to a process of distorting a point cloud (e.g., adding or deleting a new point), or generating new 3D information (e.g., mesh data generated based on a connection relationship between points included in a point cloud or a curvature or reliability of the point cloud), by using a point cloud and other information obtained from an object. Accordingly, the different post-processing methods may refer to post-processing methods in which at least one of a method of distorting the 3D point cloud obtained from the object or a method of generating new 3D information is different.

Hereinafter, a specific method in which the 3D data acquisition apparatus 200 obtains 3D data of an object including a metal area, based on first data and second data obtained in different operation modes (e.g., operation modes using different 3D scan methods or operation modes using different post-processing methods) will be described.

According to an embodiment, the 3D data acquisition apparatus 200 may receive a user input that selects an operation option of automatically changing an operation mode when a metal area is detected from an object. The 3D data acquisition apparatus 200 according to an embodiment may scan the object, and when a metal area is detected from the object, may switch an operation mode to a metal scan mode, based on the user input.

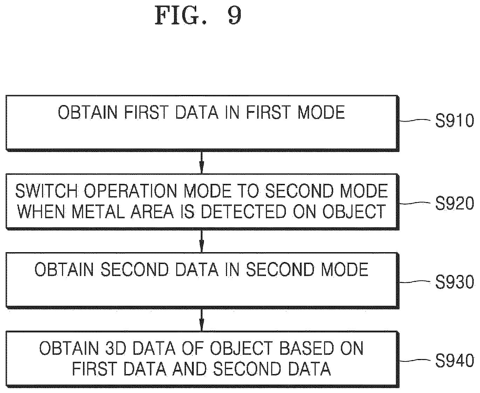

FIG. 9 is a flowchart illustrating a method in which a 3D data acquisition apparatus obtains 3D data, according to an embodiment.

In operation S910, the 3D data acquisition apparatus 200 may operate in a first mode to obtain first data by scanning an object by using a 3D scanner. According to an embodiment, the first mode may refer to an operation mode in which a scan parameter, a scan method of obtaining 2D data from the object, and/or a post-processing method for data obtained from the object is set to scan a non-metal area such as teeth and gums.

In operation S920, the 3D data acquisition apparatus 200 according to an embodiment may switch the operation mode from the first mode to a second mode, when a metal area is detected from the object.

The 3D data acquisition apparatus 200 may detect the presence of a metal area on the object, by analyzing data obtained by the 3D scanner by using an Al model. For example, the 3D data acquisition apparatus 200 may apply the first data obtained from the object as an input to the Al model, and may determine whether an area of the object being scanned is a metal area. The Al model used to determine a metal area may be an Al model trained about a large amount of scan data obtained from a metal area and a non-metal area of an object. The object used to train the Al model may be an object separate from the object scanned by the 3D data acquisition apparatus 200.

When it is determined that a metal area is included in the object, the 3D data acquisition apparatus 200 may switch the operation mode from the first mode to the second mode.

When the 3D scanner 100 according to an embodiment scans the object, the 3D scanner 100 may project at least one of red light, green light, and blue light to the object, in order to obtain shape information and color information of the object. The 3D scanner 100 according to an embodiment may sequentially project red light, green light, and blue light to the object, in order to obtain color information of the object. For example, red light, green light, or blue light projected to the object to obtain color information may include pattern light including a plurality of pieces of light in a certain figure, line, and/or point shape. However, the present disclosure is not limited to an example of projecting pattern light to the object in order to obtain color information of the object, and at least one of red light, green light, and blue light with no pattern may be projected to the object.

According to an embodiment, the 3D data acquisition apparatus 200 may analyze a color image generated by merging intensities of an R frame, a G frame, and a B frame obtained based on the red light, the green light, and the blue light. The 3D data acquisition apparatus 200 may detect the presence of a metal area on the object by analyzing the generated color image, and may determine whether the metal area is being scanned.

For example, according to an embodiment, when the 3D data acquisition apparatus 200 analyzes the color image obtained by scanning the object and it is determined that an area of a certain ratio or more in the color image is a metal area, the 3D data acquisition apparatus 200 may determine that the metal area is being scanned. For example, when it is determined that pixels occupying 40% or more of total pixels in the color image are pixels corresponding to a metal area, the 3D data acquisition apparatus 200 may determine that the metal area is being scanned. However, the present disclosure is not limited to a specific numerical value, and reference values for determining a metal value may be differently applied according to various implementation examples. The 3D data acquisition apparatus 200 may change the operation mode from the first mode to the second mode, based on a result of determining that the metal area of the object is being scanned.

In operation S930, the 3D data acquisition apparatus 200 according to an embodiment may operate in the second mode to obtain second data by scanning the object by using the 3D scanner. According to an embodiment, the second mode may refer to an operation mode in which a scan parameter, a scan method, and/or a post-processing method is set to scan a metal area.

For example, the first mode and the second mode may be operation modes using different 3D scan methods, or operation modes using different post-processing methods.

According to an embodiment, the 3D data acquisition apparatus 200 may obtain the first data and the second data by using different 3D scan methods in the first mode and the second mode.

According to an embodiment, the 3D data acquisition apparatus 200 may obtain the first data on a surface of the object to which pattern light of a first type is projected in operation S910, and may obtain the second data on the surface of the object to which pattern light of a second type is projected in operation S930. For example, the pattern light of the first type may include line pattern light, and the pattern light of the second type may include point pattern light.

According to an embodiment, the 3D data acquisition apparatus 200 may obtain the first data and the second data by using different post-processing methods.

According to an embodiment, the 3D data acquisition apparatus 200 may obtain first mesh data from a first point cloud for the object by using a general triangulation method in operation S910. The 3D data acquisition apparatus 200 may obtain the first point cloud for the surface of the object in the first mode, and may obtain the first mesh data as the first data by connecting adjacent points in the first point cloud.

On the other hand, in operation S930, the 3D data acquisition apparatus 200 may obtain second mesh data from a second point cloud for the object by using a Delaunay triangulation method. The 3D data acquisition apparatus 200 may obtain the second point cloud for the surface of the object in the second mode, and may obtain the second mesh data as the second data by connecting points in the second point cloud by using Delaunay triangulation.

For example, the 3D data acquisition apparatus 200 may apply Delaunay triangulation to the entire second point cloud, to obtain the second mesh data.

In another example, the 3D data acquisition apparatus 200 may identify points corresponding to a metal area in the second point cloud, may apply Delaunay triangulation only to the identified points, and may apply general triangulation of connecting adjacent points to points that are not identified to obtain the second mesh data.

According to an embodiment, the 3D data acquisition apparatus 200 may additionally perform filtering of deleting an edge connecting two points of a certain distance or more and/or a mesh including the edge in the second mesh data obtained by using Delaunay triangulation in operation S930.

Also, the 3D data acquisition apparatus 200 according to an embodiment of the present disclosure may obtain the first point cloud for the surface of the object in operation S910, may obtain the first mesh data by connecting points in the first point cloud, and may perform filtering of deleting a group including triangles whose number is equal to or less than a first value in the first mesh data. The 3D data acquisition apparatus 200 may obtain the first data including the first mesh data on which the filtering is performed.

On the other hand, in operation S930, the 3D data acquisition apparatus 200 may obtain the second point cloud for the surface of the object, may obtain the second mesh data by connecting points in the second point cloud, and may perform filtering of deleting a group including triangles whose number is equal to or less than a second value in the second mesh data. The 3D data acquisition apparatus 200 may obtain the second data including the second mesh data on which the filtering is performed. In this case, the second value used to perform the filtering in the second mode may be less than the first value used to perform the filtering in the first mode.

That is, a triangle group deleted by the filtering in the first mode may not be deleted in the second mode. Accordingly, compared to when where the 3D data acquisition apparatus 200 operates in the first mode, the amount of data deleted by the filtering in the second mode may be reduced. As a result, more information about the metal area may be preserved without being removed.

In operation S940, according to an embodiment, the 3D data acquisition apparatus 200 may obtain 3D data of the object based on the first data obtained in the first mode and the second data obtained in the second mode. The 3D data acquisition apparatus 200 may obtain the 3D data of the object in which the metal area and a non-metal area are mixed, by aligning the data obtained in the first mode and the second mode.

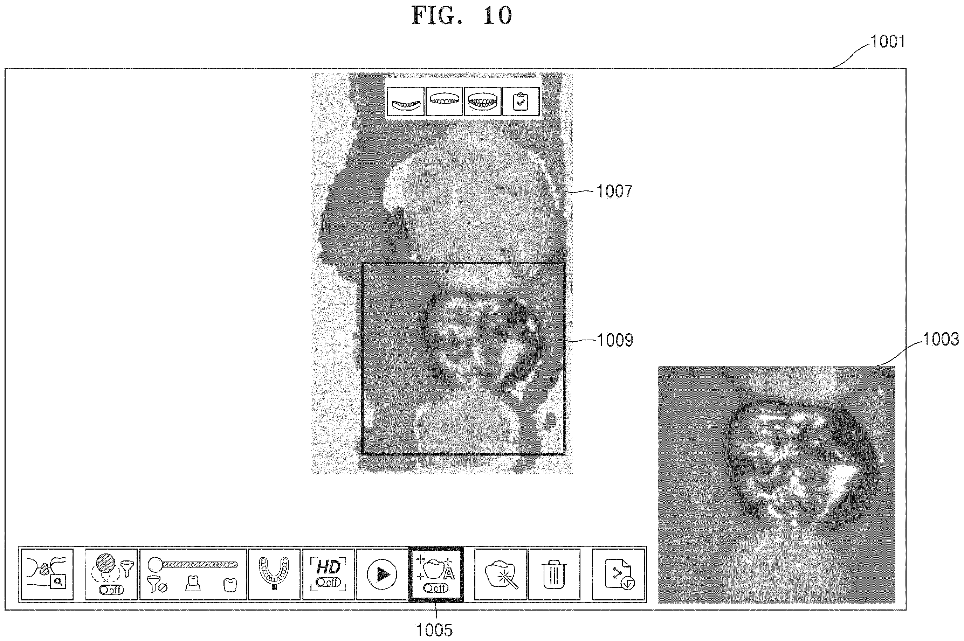

FIG. 10 illustrates an example of a user interface displayed by a 3D data acquisition apparatus, according to an embodiment.

FIG. 10 illustrates an example of a screen 1001 displayed by the 3D data acquisition apparatus 200, according to an embodiment. The 3D data acquisition apparatus 200 according to an embodiment may obtain 3D data by scanning an object by using the 3D scanner 100, and may display a 3D image 1007 generated based on the obtained 3D data.

The screen 1001 displayed by the 3D data acquisition apparatus 200 may include a 2D image 1003 obtained by scanning the object and the 3D image 1007 obtained by rendering 3D data obtained by reconstructing a plurality of 2D images obtained by scanning the object.

The 3D scanner 100 may obtain a plurality of 2D frames by scanning the object at regular time intervals (e.g., several ms to tens of ms). The 3D data acquisition apparatus 200 may obtain a plurality of 3D frames from the plurality of 2D frames. The 3D data acquisition apparatus 200 may reconstruct 3D data of the entire object by aligning or merging the plurality of 3D frames. The 3D data acquisition apparatus 200 may display an area 1009 currently being scanned by the 3D scanner 100 on the object on the screen 1001.

Also, the 3D data acquisition apparatus 200 may display setting information related to scanning of the object and/or setting information related to processing of the 3D data obtained by scanning the object, and may display, on the screen 1001, a menu bar for receiving a user input that changes the setting information. Referring to FIG. 10, the 3D data acquisition apparatus 200 according to an embodiment may provide, to the screen 1001, a user interface 1005 for receiving a user input that selects an operation option related to metal area scanning.

The user interface 1005 may display whether the operation option related to metal area scanning is turned on or off. When the operation option related to metal area scanning is turned on, the 3D data acquisition apparatus 200 according to an embodiment may automatically change an operation mode from a first mode to a second mode when a metal area is detected from the object. In contrast, when the operation option related to metal area scanning is turned off, the 3D data acquisition apparatus 200 according to an embodiment may not determine whether a metal area is detected from the object and may always operate in the first mode without changing the operation mode even when scanning a metal area on the object.

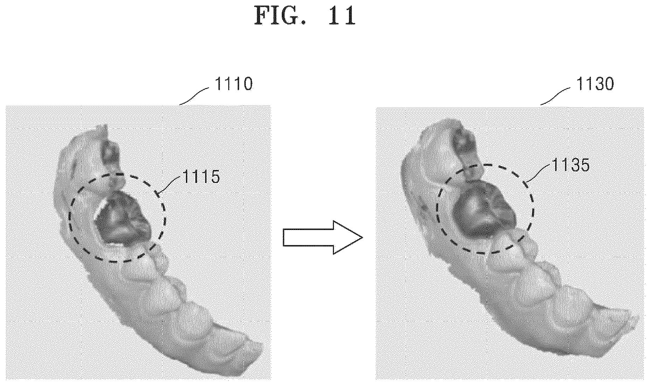

FIG. 11 illustrates an example of 3D data obtained by a 3D data acquisition apparatus by scanning an object in a first mode and a second mode, according to an embodiment.

As shown in FIG. 11, when the 3D data acquisition apparatus 200 operates in a first mode to obtain 3D data 1110, a lot of 3D data may be omitted in a portion 1115 corresponding to a metal area of an object. This is because most of pattern light projected to the metal area is reflected, and thus, the amount of 3D shape information that may be obtained by the 3D scanner 100 by imaging the metal area is less than the amount of information obtained by imaging a non-metal area.

Accordingly, according to an embodiment, when the metal area is to be scanned, the 3D data acquisition apparatus 200 may change an operation mode to a second mode that is suitable for obtaining 3D data of the metal area (i.e., suitable for obtaining as much surface information of the metal area to which pattern light is projected as possible without loss). As shown in FIG. 11, when the 3D data acquisition apparatus 200 obtains 3D data 1130 in the second mode, the 3D data acquisition apparatus 200 may obtain complete data even for a portion 1135 corresponding to the metal area of the object.

Hereinafter, a specific method in which the 3D data acquisition apparatus 200 according to an embodiment operates in a second mode to obtain 3D data on a metal area will be described.

According to an embodiment, the 3D data acquisition apparatus 200 may change an operation mode by changing patterning light projected to an object, when a metal area is detected from the object that is scanned.

For example, the 3D data acquisition apparatus 200 may scan the object by using line pattern light in a first mode, and may use point pattern light in a second mode. Because a method of using point pattern light is more resistant to light reflection than a method of using line pattern light, the method of using point pattern light may be more effective in obtaining data on an area formed of a metal. However, the present disclosure is not limited to point pattern light, and various pieces of pattern light appropriately designed to scan a metal area may be used.

Also, when the 3D data acquisition apparatus 200 according to an embodiment obtains 3D shape information of an object surface from a plurality of 2D images, the 3D data acquisition apparatus 200 may use a stereo matching method in the second mode. The stereo matching method may include, for example, blocking matching, graph cut, or semi-global matching.

Also, the 3D data acquisition apparatus 200 according to an embodiment may change an operation mode by changing a post-processing method that is a processing method after 3D point cloud data is obtained from the object. That is, the 3D data acquisition apparatus 200 may perform post-processing in different methods in the first mode and the second mode.

The 3D data acquisition apparatus 200 according to an embodiment may generate 3D polygon mesh data by using a triangulation method of forming a triangle mesh by connecting points included in a point cloud.

The 3D data acquisition apparatus 200 according to an embodiment may use any of various methods to generate mesh data from a point cloud.

For example, the 3D data acquisition apparatus 200 may generate a 3D point cloud by using 2D image data obtained by scanning an object, and may generate mesh data from the 3D point cloud by using a connection relationship between pixels of the 2D image data. The 3D data acquisition apparatus 200 may generate mesh data by using a connection relationship between adjacent pixels from among pixels constituting the 2D image data.

In another example, the 3D data acquisition apparatus 200 may generate mesh data by using a 3D point cloud. For example, the 3D data acquisition apparatus 200 may generate mesh data from a 3D point cloud by using a method such as marching cubes or Delaunay triangulation. Delaunay triangulation may refer to a method of connecting points in a triangular shape so that a minimum value of interior angles of triangles is maximized.

Even when the 3D data acquisition apparatus 200 according to an embodiment generates mesh data from the same point cloud, the 3D data acquisition apparatus 200 may generate mesh data of different types according to an input parameter and a triangulation method.

When the 3D data acquisition apparatus 200 according to an embodiment generates a point cloud including a plurality of vertices by 3D scanning, a minimum physical distance between adjacent vertices may be determined according to a resolution of an optical system and/or a camera used during scanning. However, there may be cases where due to a material of an object, a shape of the object, a geometric condition between the object and a 3D scanner, or an illumination condition of the object, 3D data of at least a part of the object may not be obtained.

When 3D data on at least a part of the object is not obtained, 3D data obtained by one scanning may include vertices in which a distance between adjacent vertices is equal to or more than a certain distance. The 3D data acquisition apparatus 200 according to an embodiment may determine, when vertices that are spaced apart by a reference distance or more are connected, the connection as inappropriate connection and may delete the connection relationship. As a result, the 3D data acquisition apparatus 200 according to an embodiment may obtain mesh data including a triangle mesh formed by connecting only vertices spaced apart by less than the reference distance.

Also, the 3D data acquisition apparatus 200 may arrange triangles adjacent to each other in mesh data into at least one group. The 3D data acquisition apparatus 200 may identify the number of triangles constituting each group. When the number of triangles constituting a group is equal to or less than a certain value, the 3D data acquisition apparatus 200 may consider the group as noise occurring in a scan process and may filter and delete the group from the mesh data.

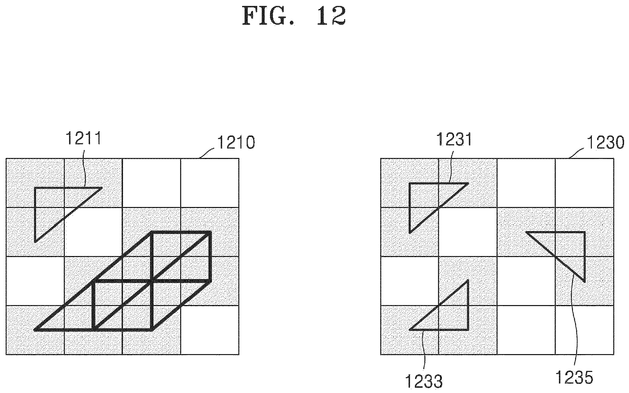

FIG. 12 illustrates an example of mesh data obtained by scanning a general area and mesh data obtained by scanning a metal area, by a 3D data acquisition apparatus, according to an embodiment.

According to an embodiment, the 3D data acquisition apparatus 200 may perform filtering of deleting a group including triangles whose number is equal to or less than a certain value, on mesh data 1210 obtained from a non-metal area of an object. For example, the 3D data acquisition apparatus 200 may determine a group including three or fewer triangles as noise. Referring to the example of FIG. 12, the 3D data acquisition apparatus 200 may delete a triangle group 1211 including one triangle from the mesh data 1210.

Also, in FIG. 12, mesh data 1230 obtained from a metal area of the object is illustrated. As shown in the mesh data 1230 of FIG. 12, because data obtained by scanning is insufficient for the metal area, the mesh data 1230 sparsely including triangle groups 1231, 1233, and 1235 may be generated. According to an embodiment, the 3D data acquisition apparatus 200 may perform filtering of deleting a group including triangles whose number is equal to or less than a certain value, on the mesh data 120 obtained from the metal area of the object. For example, the 3D data acquisition apparatus 200 may determine a group including three or fewer triangles as noise. When the 3D data acquisition apparatus 200 performs filtering on the mesh data 1230, the triangle groups 1231, 1233, and 1235 that are sparsely included may be deleted from the mesh data 1230. When the 3D data acquisition apparatus 200 determines all of the triangle groups 1231, 1233, and 1235 as noise and deletes them from the mesh data 1230, great data loss may occur.

Accordingly, according to an embodiment of the present disclosure, the 3D data acquisition apparatus 200 may change an operation mode to a second mode by changing a reference value for performing filtering, to reduce data loss. For example, the 3D data acquisition apparatus 200 may be set to delete a group including 'a' or fewer triangles in a first mode and when a metal area is detected and an operation mode is changed, the 3D data acquisition apparatus 200 may be set to delete a group including `b' or more triangles in the second mode. In this case, 'a' and 'b' are natural numbers, and 'b' may be a number less than 'a'.

For example, when the 3D data acquisition apparatus 200 operates in the first mode, the 3D data acquisition apparatus 200 may delete, from data, a group including triangles whose number is greater than 'b' and less than 'a'. In contrast, when the 3D data acquisition apparatus 200 operates in the second mode, the 3D data acquisition apparatus 200 does not delete, from data, a group including triangles whose number is greater than 'b' and less than 'a'. Accordingly, compared to a case where the 3D data acquisition apparatus 200 operates in the first mode, when the 3D data acquisition apparatus 200 operates in the second mode, as much surface information of a metal area as possible may be obtained without loss.

According to an embodiment of the present disclosure, in order to reduce data loss, the 3D data acquisition apparatus 200 may perform a general triangulation method in the first mode, and may generate mesh data by using a Delaunay triangulation method in the second mode. When the 3D data acquisition apparatus 200 uses a Delaunay triangulation method, the 3D data acquisition apparatus 200 may configure a mesh by connecting points even when the points are far from each other. Accordingly, because it is difficult to include a group including triangles whose number is equal to or less than a reference value in mesh data obtained by a Delaunay triangulation method, data may not be deleted by filtering.

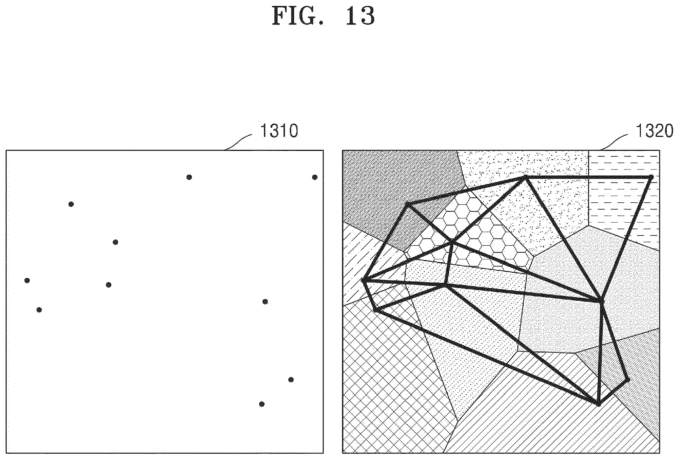

FIG. 13 is a view for describing Delaunay triangulation performed by a 3D data acquisition apparatus, according to an embodiment.

The 3D data acquisition apparatus 200 according to an embodiment may obtain a plurality of 2D images by imaging an object to which pattern light is projected, and may obtain a point cloud 1310 including shape information of a surface of the object based on the plurality of 2D images and information about the pattern light. The 3D data acquisition apparatus 200 may generate mesh data 1320 by connecting points included in the point cloud 1310. In this case, when the 3D data acquisition apparatus 200 according to an embodiment generates the mesh data 1320 from the point cloud 1310, the 3D data acquisition apparatus 200 may use a Delaunay triangulation method in a second mode.

As shown in FIG. 13, the 3D data acquisition apparatus 200 according to an embodiment may use a Delaunay triangulation method, and thus, may generate mesh data while minimizing data loess even when a small amount of point information is obtained from a metal area.

However, noise data generally exists far from object data to be scanned. Hence, when a Delaunay triangulation method is used, because even points obtained as noise are connected to a mesh, noise is not filtered by filtering of deleting a group including triangles whose number is equal to or less than a certain value. Accordingly, in order to prevent this problem, the 3D data acquisition apparatus 200 according to an embodiment may be configured to delete an edge of a certain length or more and/or a mesh including the edge, when generating mesh data by using a Delaunay triangulation method.

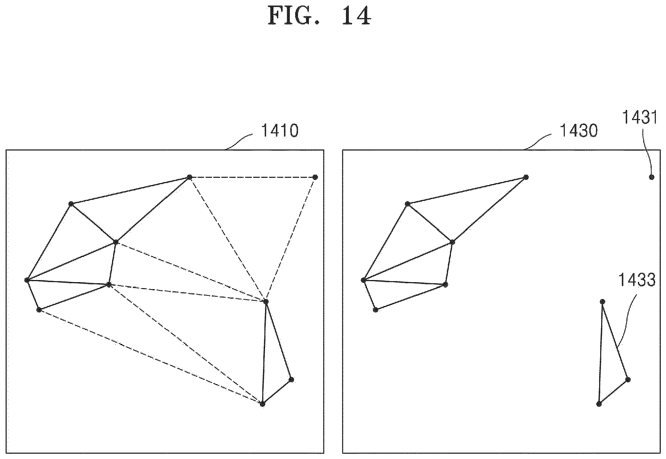

FIG. 14 illustrates an example of filtering performed by a 3D data acquisition apparatus on mesh data, according to an embodiment.

FIG. 14 illustrates initial mesh data 1410 obtained when the 3D data acquisition apparatus 200 operates in a second mode and mesh data 1430 after filtering, according to an embodiment. As shown in FIG. 14, the 3D data acquisition apparatus 200 according to an embodiment may obtain the mesh data 1430 filtered by deleting edges of a certain length or more and/or meshes including the edges in the initial mesh data 1410. In FIG. 14, edges of a certain length or more are marked by dashed lines.

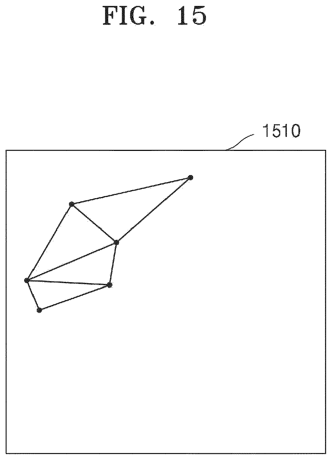

The 3D data acquisition apparatus 200 may additionally perform filtering of deleting a group including triangles whose number is equal to or less than a certain value on the mesh data 1470 filtered by deleting edges of a certain length or more and/or meshes including the edges. The 3D data acquisition apparatus 200 may obtain final mesh data 1510 shown in FIG. 15, by deleting triangle groups 1431 and 1433 by using filtering.

The 3D data acquisition apparatus 200 according to an embodiment may obtain 3D data accurately representing a 3D shape of an object in which a non-metal area and a metal area are mixed, by aligning data obtained in a first mode and data obtained in a second mode.

According to an embodiment, the 3D data acquisition apparatus 200 may apply a post-processing method that is set to scan a metal area, to entire 3D data, in a second mode. For example, when the 3D data acquisition apparatus 200 operates in the second mode, the 3D data acquisition apparatus 200 may generate mesh data by applying Delaunay triangulation to the entire 3D data, or may perform filtering of deleting a group including a small number of triangles by using a changed reference value on the entire 3D data.

However, the present disclosure is not limited thereto, and the 3D data acquisition apparatus 200 according to an embodiment may perform post-processing in a second mode, only on a portion identified as a metal area in 3D data. A Delaunay triangulation method requires more computation than a general triangulation method. Also, filtering using a low reference value may also increase the amount of data that is preserved without being deleted, resulting in an increase in the amount of computation. Accordingly, the 3D data acquisition apparatus 200 according to an embodiment may reduce an increase in the amount of computation, by performing post-processing in the second mode, only on a portion identified as a metal area in the 3D data.

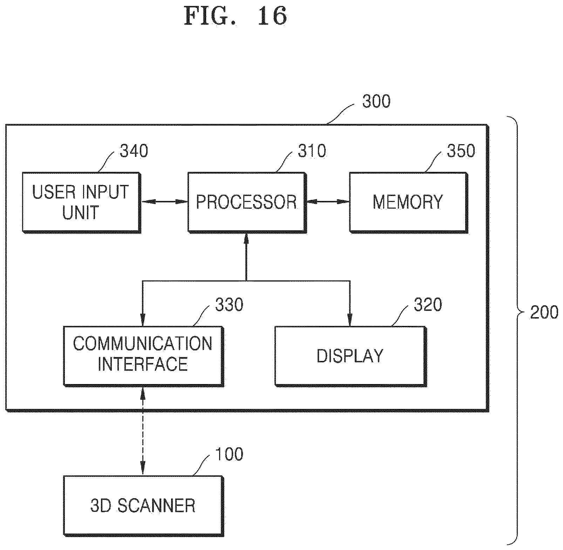

FIG. 16 is a block diagram illustrating a 3D data acquisition apparatus, according to an embodiment.

The block diagram of the 3D data acquisition apparatus 200 of FIG. 16 is an example of the 3D data acquisition apparatus 200 described above. The 3D data acquisition apparatus 200 of FIG. 16 may perform a 3D data acquisition method according to various embodiments of the present disclosure, and the description of FIGS. 1 to 15 may be applied. Accordingly, the same description as that made above will be omitted.

As shown in FIG. 16, the 3D data acquisition apparatus 200 according to an embodiment may include the 3D scanner 100 and the 3D image display apparatus 300. The 3D data acquisition apparatus 200 according to an embodiment may obtain 3D data representing a shape of an object by scanning the object by using the 3D scanner 100.

The 3D scanner 100 according to an embodiment may transmit a 2D image frame obtained by scanning the object or a 3D frame obtained from the 2D image frame to the 3D image display apparatus 300.

The 3D image display apparatus 300 according to an embodiment may be connected to the 3D scanner 100 through a wired or wireless communication network, and may receive raw data or the 3D frame obtained by scanning the object from the 3D scanner 100.

The 3D image display apparatus 300 may be any electronic device capable of generating, processing, displaying/ and/or transmitting a 3D image of the object, based on the received 2D image frame or 3D frame. The 3D image display apparatus 300 according to various embodiments of the present disclosure may be a fixed terminal or a mobile terminal. The 3D image display apparatus 300 may be a computing device such as, but not limited to, a smartphone, a laptop computer, a desktop computer, a PDA, or a tablet PC.

Referring to FIG. 16, the 3D image display apparatus 300 may include a processor 310, the display 320, a communication interface 330, a user input unit 340, and a memory 350.

The processor 310 according to an embodiment performs at least one instruction to control the 3D scanner 100 and the 3D image display apparatus 300 to perform an intended operation. In the present disclosure, an operation performed by the 3D data acquisition apparatus 200 may be an operation performed by the 3D image display apparatus 300, or may be an operation controlled by the processor 310 to be performed by the 3D scanner 100 or the 3D image display apparatus 300. The at least one instruction may be stored an internal memory included in the processor 310 or in the memory 350 included in the 3D image display apparatus 300 separate from the processor 310.

The processor 310 according to an embodiment may execute the at least one instruction to control at least one element included in the 3D data acquisition apparatus 200 to perform an intended operation. Accordingly, when the processor 310 performs a certain operation, it may mean that the processor 310 controls at least one element included in the 3D data acquisition apparatus 200 to perform the certain operation.

The processor 310 according to an embodiment may include a random-access memory (RAM) (not shown) storing a signal or data input from the outside of the 3D image display apparatus 300 or used as a storage area corresponding to various operations performed by the 3D image display apparatus 300, a read-only memory (ROM) (not shown) in which a control program for controlling the 3D image display apparatus 300 and/or a plurality of instructions are stored, and at least one internal processor (not shown) configured to execute at least one instruction.

Also, the processor 310 may include a graphics processing unit (not shown) for graphics processing on a video. Also, the processor 310 may be implemented as a system on a chip (SoC) in which a core (not shown) and the GPU (not shown) are integrated.

The processor 310 according to an embodiment may generate 3D data of an object based on data received from the 3D scanner 100, and may generate a 3D image of the object.

The display 320 may display a certain screen under the control of the processor 310. In detail, the display 320 may display a user interface screen including an image generated based on data obtained by the 3D scanner 100 by scanning the object. Also, the display 320 may display a user interface screen including information related to diagnosis and treatment of the object.

The communication interface 330 may communicate with at least one external electronic device (not shown) through a wired or wireless communication network. In detail, the communication interface 330 may communicate with the 3D scanner 100 under the control of the processor 310.

The user input unit 340 may receive a user input for controlling the 3D data acquisition apparatus 200. The user input unit 340 may include, but is not limited to, a touch panel for sensing a user's touch, a button for receiving the user's push operation, and a user input device including a mouse or keyboard for indicating or selecting one point on the user interface screen.

Also, the user input unit 340 may include a voice recognition device (not shown) for voice recognition. For example, the voice recognition device (not shown) may be a microphone, and the voice recognition device may receive a voice command or a voice request of the user. Accordingly, the processor 310 may control an operation corresponding to the voice command or the voice request to be performed.

According to an embodiment, the user input unit 340 may receive a user input that selects an operation option of automatically changing an operation mode from a first mode to a second mode when a metal area is detected from an object.

The memory 350 may store at least one instruction. Also, the memory 350 may store at least one instruction executed by the processor 310. Also, the memory 350 may store at least one program executed by the processor 310. The memory 350 may store data (e.g., raw data obtained by scanning the object, 2D image data, or 3D data) received from the 3D scanner 100. The memory 350 may store an object image three-dimensionally representing an object.

The processor 310 according to an embodiment of the present disclosure may execute a program stored in the memory 350 to control an overall operation of the 3D data acquisition apparatus 200. The processor 310 may control other elements included in the 3D data acquisition apparatus 200 to obtain 3D data of an object.

The description of FIG. 4 or 9 may be applied to a specific method in which the processor 310 obtains 3D data by controlling an overall operation of the 3D data acquisition apparatus 200, and a repeated description will be omitted.

According to an embodiment, the processor 310 may operate to automatically change an operation mode from a first mode to a second mode when a metal area is detected from an object, based on a user input.

According to an embodiment, the processor 310 may operate in the first mode to obtain first data by scanning the object by using the 3D scanner 100, and may change the operation mode to the second mode when a metal area is detected from the object. The processor 310 may operate in the second mode to obtain second data by scanning the object, and may obtain 3D data of the object based on the first data obtained in the first mode and the second data obtained in the second mode.

For example, the first mode and the second mode may refer to operation modes using different 3D scan methods, or operation modes using different post-processing methods.

According to an embodiment, the processor 310 may obtain the first data and the second data by using different 3D scan methods in the first mode and the second mode.

According to an embodiment, the processor 310 may obtain the first data on a surface of the object to which pattern light of a first type is projected, in the first mode. For example, the pattern light of the first type may include line pattern light. According to an embodiment, the processor 310 may obtain the second data on the surface of the object to which pattern light of a second type is projected, in the second mode. For example, the pattern light of the second type may be point pattern light.

The processor 310 according to an embodiment may project the pattern light of the first type to the object, and may control the 3D data acquisition apparatus 200 to obtain the first data on the surface of the object to which the pattern light of the first type is projected.

The processor 310 may project the pattern light of the first type to the object, and may control the 3D scanner 100 to obtain 2D images of different viewpoints for the surface of the object to which the pattern light of the first type is projected. For example, the pattern light of the first type may include line pattern light.

The processor 310 may obtain first point cloud data of the object as the first data, based on the 2D images of the surface of the object to which the pattern light of the first type is projected and information about the pattern light of the first type. For example, the processor 310 may determine which line of a 2D image scanned by a second image sensor corresponds to each line on the object shown in a 2D image scanned by a first image sensor. The processor 310 may calculate 3D coordinates of points constituting each line matched between 2D images, based on the projected line pattern and a distorted line shown in the 2D images. The processor 310 may obtain the first point cloud data by calculating 3D coordinates of each pixel included in the 2D images.

The processor 310 according to an embodiment may project the pattern light of the second type to the object, and may control the 3D data acquisition apparatus 200 to obtain the second data of the surface of the object to which the pattern light of the second type is projected.

The processor 310 may project the pattern light of the second type to the object, and may control the 3D scanner 100 to obtain 2D images of different viewpoints for the surface of the object to which the pattern light of the second type is projected. For example, the pattern light of the second type may include point pattern light.

The processor 310 may obtain second point cloud data of the object as the second data, based on the 2D images of the surface of the object to which the pattern light of the second type is projected and information about the pattern light of the second type. For example, the processor 310 may determine which point of a 2D image scanned by the second image sensor corresponds to each point of the object surface shown in a 2D image scanned by the first image sensor. The processor 310 may calculate 3D coordinates of each point matched between 2D images, based on the projected point pattern and a distorted point pattern shown in the 2D images. The processor 310 may obtain the first point cloud data by calculating 3D coordinates of each pixel included in the 2D images.

According to an embodiment, the 3D scanner 100 may be configured to alternately project the pattern light of the first type and the pattern light of the second type. The processor 310 may obtain the first data based on a plurality of 2D image frames obtained by using the pattern light of the first type, and may obtain the second data based on a plurality of 2D image frames obtained by using the pattern light of the second type, by using the 3D scanner 100.

For example, when the 3D scanner 100 obtains the second data by using the pattern light of the second type, the 3D scanner 100 may obtain an R frame, a G frame, and a B frame, by sequentially projecting, to the object, red pattern light, green pattern light, and blue pattern light, in order to obtain color information of the object. The processor 310 may obtain the second point cloud data as the second data based on the R frame, the G frame, and the B frame.

According to another embodiment, the processor 310 may be configured to scan the object to which the pattern light of the first type is projected by using the 3D scanner 100, and then when a metal area is detected, project the pattern light of the second type.

First, the processor 310 may control the 3D scanner 100 to obtain the first data by continuously scanning frames of the object to which the pattern light of the first type is projected. The processor 310 may obtain the first point cloud data as the first data based on the plurality of 2D image frames obtained from the object to which the pattern light of the first type is projected. When a difference of a brightness value between a frame including 2D images of different viewpoints obtained for the surface of the object to which the pattern light of the first type is projected and a neighboring frame is equal to or greater than a threshold value, the processor 310 may determine to project the pattern light of the second type, instead of the pattern light of the first type.

According to another embodiment, the processor 310 may determine whether an area of the object being scanned is a metal area, by using an Al model stored in the memory 350. The processor 310 may determine whether an area of the object being scanned is a metal area, by applying a 2D image frame or a 3D frame obtained from the object to the Al model. The Al model used to determine a metal area may be an Al model trained about a large amount of scan data obtained from a metal area and a non-metal area of an object. When it is determined that an area of the object is a metal area, the 3D data acquisition apparatus 200 may determine to project the pattern light of the second type, instead of the pattern light of the first type.

Next, the processor 310 may control the 3D scanner 100 to obtain the second data by continuously scanning frames of the object to which the pattern light of the second type is projected. The processor 310 may obtain the second point cloud data as the second data, based on the plurality of 2D image frames obtained from the object to which the pattern light of the second type is projected.

The processor 310 according to an embodiment may obtain 3D data of the object, based on the first data and the second data.

When the 3D scanner 100 according to an embodiment is configured to alternately project the pattern light of the first type and the pattern light of the second type, the first data obtained by the 3D scanner 100 by using the pattern light of the first type may include first shape information of the object. The second data obtained by the 3D scanner 100 by sequentially projecting red pattern light of the second type, green pattern light of the second type, and blue pattern light of the second type may include second shape information and color information of the object. The processor 310 may obtain the 3D data based on the first shape information, the second shape information, and the color information.

The processor 310 according to an embodiment may obtain 3D data based on a weighted sum of the first data and the second data. For example, the first data, the second data, and the third data may be point cloud data or polygon mesh data.

The processor 310 according to an embodiment may obtain the 3D data, by using the first data for at least a partial area of the object with high reliability and using the second data for the remaining area of the object with low reliability, based on reliability of the first data.

The processor 310 according to another embodiment may determine overlapping points between a plurality of first points included in the first data and a plurality of second points included in the second data. The processor 310 may obtain the 3D data by using an average value of the overlapping points.

According to another embodiment, the processor 310 may obtain the first data and the second data by using different post-processing methods.

For example, according to an embodiment, the processor 310 may obtain a first point cloud for the surface of the object in the first mode, and may obtain first mesh data by connecting adjacent points in the first point cloud. Also, the processor 310 may perform filtering of deleting a group including triangles whose number is equal to or less than a first value in the first mesh data. The processor 310 may obtain the first data including the first mesh data on which the filtering is performed.

According to an embodiment, the processor 310 may obtain a second point cloud for the surface of the object in the second mode, and may obtain second mesh data by connecting points in the second point cloud. The processor 310 may perform filtering of deleting a group including triangles whose number is equal to or less than a second value in the second mesh data. The processor 310 may obtain the second data including the second mesh data on which the filtering is performed. In this case, the second value used for the filtering in the second mode may be less than the first value used for the filtering in the first mode.

In another embodiment, according to an embodiment, the processor 310 may obtain the first mesh data as the first data from the first point cloud for the object by using a general triangulation method. On the other hand, the processor 310 may obtain the second mesh data as the second data from the second point cloud for the object, by using Delaunay triangulation.

The processor 310 according to an embodiment may identify points corresponding to a metal area in the second point cloud to obtain the second mesh data, and may connect the identified points by using Delaunay triangulation. The processor 310 may obtain the second mesh data by connecting adjacent points for points that are not identified in the second point cloud.

Also, the processor 310 may additionally perform filtering of deleting an edge connecting two points of a certain distance or more and/or a mesh including the edge in the second mesh data.

According to an embodiment, the processor 310 may change the operation mode from the first mode to the second mode when a metal area is detected from the object.

According to an embodiment, the processor 310 may detect the presence of a metal area on the object, by analyzing data obtained by the 3D scanner by using an Al model. For example, the processor 310 may apply the first data obtained from the object as an input to the Al model, and may determine whether an area of the object being scanned is a metal area. The Al model used to determine a metal area may be an Al model trained about a large amount of scan data obtained from a metal area and a non-metal area of an object. When it is determined that an area of the object is a metal area, the processor 310 may change the operation mode from the first mode to the second mode.

According to an embodiment, the processor 310 may analyze a color image generated by merging intensities of an R frame, a G frame, and a B frame obtained based on red light, green light, and blue light. The processor 310 may detect the presence of a metal area on the object, by analyzing the generated color image.

For example, according to an embodiment, when the processor 310 analyzes the color image obtained by scanning the object, and it is determined that an area of a certain ratio or more in the color image is a metal area (e.g., it is determined that pixels occupying 40% or more of total pixels in the color image are pixels corresponding to a metal area), the processor 310 may determine that the metal area is being scanned. The processor 310 may change the operation mode from the first mode to the second mode, based on a result of determining that the metal area of the object is being scanned.

A 3D data acquisition method according to an embodiment of the present disclosure may be implemented as a program command executable by various computer means and may be recorded on a computer-readable medium. Also, an embodiment of the present disclosure may provide a computer-readable storage medium having recorded thereon at least one program including at least one instruction for executing a 3D data acquisition method.

The computer-readable storage medium may include program commands, data files, data structures, and the like separately or in combinations. Examples of the computer-readable storage medium may include a magnetic medium such as a hard disk, a floppy disk, or a magnetic tape, an optical medium such as a compact disc read-only memory (CD-ROM) or a digital versatile disc (DVD), a magneto-optical medium such as a floptical disk, and a hardware device configured to store and execute program commands such as a ROM, a RAM, or a flash memory.

A machine-readable storage medium may be provided as a non-transitory storage medium. Here, the term 'non-transitory storage medium' may refer to a tangible device. Also, the 'non-transitory storage medium' may include a buffer where data is temporarily stored.

According to an embodiment, methods of displaying an intraoral image according to various embodiments of the present disclosure may be provided in a computer program product. The computer program product may be distributed in the form of a machine-readable storage medium (e.g., a CD-ROM). Alternatively, the computer program product may be distributed (e.g., downloaded or uploaded) online via an application store (e.g., Play Store^{™}) or between two user devices (e.g., smartphones) directly.

Although embodiments of the present disclosure have been described in detail above, the scope of the present disclosure is not limited thereto, and various modifications and improvements made by one of ordinary skill in the art by using the basic concept of the present disclosure defined by the claims are also within the scope of the present disclosure.

### [Description of Reference Numerals]

100: 3D scanner
200: 3D data acquisition apparatus
300: 3D image display apparatus
310: processor
320: display
330: communication interface
340: user input unit
350: memory

## Claims

1. A three-dimensional (3D) data acquisition apparatus comprising:
a communication interface communicating with a 3D scanner; and
a processor configured to execute at least one instruction to obtain 3D data to:
operate in a first mode to obtain first data by scanning an object by using the 3D scanner;
switch an operation mode to a second mode based on a metal area being detected from the object;
operate in the second mode to obtain second data by scanning the object by using the 3D scanner; and
obtain 3D data of the object, based on the first data and the second data.

2. The 3D data acquisition apparatus of claim 1, wherein the processor is further configured to
obtain the first data on a surface of the object to which pattern light of a first type is projected, and
obtain the second data on the surface of the object to which pattern light of a second type is projected.

3. The 3D data acquisition apparatus of claim 2, wherein
the pattern light of the first type comprises line pattern light, and
the pattern light of the second type comprises point pattern light.

4. The 3D data acquisition apparatus of claim 1, wherein the first data obtained in the first mode and the second data obtained in the second mode are obtained through different post-processing methods.

5. The 3D data acquisition apparatus of claim 4, wherein the processor is further configured to
obtain a first point cloud for a surface of the object, and obtain first mesh data by connecting adjacent points in the first point cloud, wherein the first data comprises the first mesh data, and
obtain a second point cloud for the surface of the object, and obtain second mesh data by connecting points in the second point cloud by using Delaunay triangulation, wherein the second data comprises the second mesh data.

6. The 3D data acquisition apparatus of claim 5, wherein the processor is further configured to:
identify points corresponding to a metal area on the object in the second point cloud; and
obtain the second mesh data, by connecting the identified points by using the Delaunay triangulation and connecting adjacent points for points that are not identified in the second point cloud.

7. The 3D data acquisition apparatus of claim 5, wherein the processor is further configured to perform filtering of deleting an edge connecting two points of a certain distance or more in the second mesh data.

8. The 3D data acquisition apparatus of claim 4, wherein the processor is further configured to:
obtain a first point cloud for a surface of the object, obtain first mesh data by connecting points in the first point cloud, and perform filtering of deleting a group comprising triangles whose number is equal to or less than a first value in the first mesh data, wherein the first data comprises the first mesh data on which the filtering is performed; and
obtain a second point cloud for the surface of the object, obtain second mesh data by connecting points in the second point cloud, and perform filtering of deleting a group comprising triangles whose number is equal to or less than a second value in the second mesh data, wherein the second data comprises the second mesh data on which the filtering is performed,
wherein the second value is less than the first value.

9. The 3D data acquisition apparatus of claim 1, wherein the processor is further configured to detect a metal area from the object, by analyzing data obtained by the 3D scanner by using an artificial intelligence (Al) model.

10. The 3D data acquisition apparatus of claim 1, further comprising a user input unit configured to receive a user input that selects an operation option of automatically changing the operation mode from the first mode to the second mode when a metal area is detected from the object.

11. A three-dimensional (3D) data acquisition method comprising:
operating in a first mode to obtain first data by scanning an object by using a 3D scanner;
switching an operation mode to a second mode, based on a metal area being detected from the object;
operating in the second mode to obtain second data by scanning the object; and
obtaining 3D data of the object, based on the first data and the second data.

12. The 3D data acquisition method of claim 11, wherein the operating in the first mode to obtain the first data comprises obtaining the first data on a surface of the object to which pattern light of a first type is projected, and
the operating in the second mode to obtain the second data comprises obtaining the second data on the surface of the object to which pattern light of a second type is projected.

13. The 3D data acquisition method of claim 12, wherein
the pattern light of the first type comprises line pattern light, and
the pattern light of the second type comprises point pattern light.

14. The 3D data acquisition method of claim 11, wherein the first data obtained in the first mode and the second data obtained in the second mode are obtained through different post-processing methods.

15. The 3D data acquisition method of claim 14, wherein the operating in the first mode to obtain the first data comprises:
obtaining a first point cloud for a surface of the object; and
obtaining first mesh data by connecting adjacent points in the first point cloud, wherein the first data comprises the first mesh data, and
the operating in the second mode to obtain the second data comprises:
obtaining a second point cloud for the surface of the object; and
obtaining second mesh data by connecting points in the second point cloud by using Delaunay triangulation, wherein the second data comprises the second mesh data.

16. The 3D data acquisition method of claim 15, wherein the obtaining of the second mesh data comprises:
identifying points corresponding to a metal area on the object in the second point cloud; and
obtaining the second mesh data, by connecting the identified points by using the Delaunay triangulation and connecting adjacent points for points that are not identified in the second point cloud.

17. The 3D data acquisition method of claim 15, wherein the operating in the second mode to obtain the second data further comprises performing filtering of deleting an edge connecting two points of a certain distance or more in the second mesh data.

18. The 3D data acquisition method of claim 14, wherein the operating in the first mode to obtain the first data comprises:
obtaining a first point cloud for a surface of the object;
obtaining first mesh data by connecting points in the first point cloud; and
performing filtering of deleting a group comprising triangles whose number is equal to or less than a first value in the first mesh data, wherein the first data comprises the first mesh data on which the filtering is performed, and
the operating in the second mode to obtain the second data comprises:
obtaining a second point cloud for the surface of the object;
obtaining second mesh data by connecting points in the second point cloud; and
performing filtering of deleting a group comprising triangles whose number is equal to or less than a second value in the second mesh data, wherein the second data comprises the second mesh data on which the filtering is performed,
wherein the second value is less than the first value.

19. The 3D data acquisition method of claim 11, wherein the switching of the operation mode to the second mode comprises detecting a metal area from the object, by analyzing data obtained by the 3D scanner by using an artificial intelligence (Al) model.

20. The 3D data acquisition method of claim 11, further comprising receiving a user input that selects an operation option of automatically changing the operation mode from the first mode to the second mode when a metal area is detected from the object.
